(19) Europäisches Patentamt
European Patent Office
Office européen des brevets

(11) **EP 4 575 579 A1**

(12) **EUROPEAN PATENT APPLICATION**
published in accordance with Art. 153(4) EPC

(43) Date of publication:
**25.06.2025 Bulletin 2025/26**

(21) Application number: **23884311.4**

(22) Date of filing: **20.07.2023**

(51) International Patent Classification (IPC):
***G01S 17/931*** (2020.01)

(52) Cooperative Patent Classification (CPC):
**G01S 13/08; G01S 13/86; G01S 13/931;
G01S 15/08; G01S 15/86; G01S 15/931;
G01S 17/08; G01S 17/86; G01S 17/931;
G06T 3/047; G06T 7/13; G06T 7/136; G06T 7/50;
G06T 7/80; G06T 7/90**

(86) International application number:
**PCT/CN2023/108397**

(87) International publication number:
**WO 2024/093372 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 CN 202211349288**

(71) Applicant: **Huawei Technologies Co., Ltd.
Shenzhen, Guangdong 518129 (CN)**

(72) Inventors:
• **ZHOU, Lei**
**Shenzhen, Guangdong 518129 (CN)**
• **CAI, Jiyuan**
**Shenzhen, Guangdong 518129 (CN)**
• **YIN, Hao**
**Shenzhen, Guangdong 518129 (CN)**
• **CAI, Jia**
**Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **RANGING METHOD AND DEVICE**

(57)     A ranging method and apparatus are provided, and relate to the field of autonomous driving, so that a vehicle can perform ranging on an obstacle. The method is applied to a vehicle, the vehicle includes a first camera and a second camera, and the method includes: first obtaining a first image and a second image (S301); then obtaining a first depth map and a second depth map (S302); and subsequently determining a distance between an object in the first image and the vehicle and/or a distance between an object in the second image and the vehicle based on the first depth map and the second depth map (S303). The first image is an image captured by the first camera, the second image is an image captured by the second camera, the first camera and the second camera have a common view area, the first camera is a fisheye camera, the second camera is a pinhole camera, the first depth map is a depth map corresponding to the first image, and the second depth map is a depth map corresponding to the second image.

FIG. 4

## Description

This application claims priority to Chinese Patent Application No. 202211349288.4, filed with the China National Intellectual Property Administration on October 31, 2022 and entitled "RANGING METHOD AND APPARATUS", which is incorporated herein by reference in its entirety.

## TECHNICAL FIELD

Embodiments of this application relate to the field of autonomous driving, and in particular, to a ranging method and apparatus.

## BACKGROUND

With the progress of science and technology, advanced assisted driving and autonomous driving technologies gradually enter people's life. In the advanced assisted driving and autonomous driving technologies, sensing a distance to an obstacle around an ego vehicle is an important basis for decision-making, planning, and driving safety.

In a related technology, the distance to the obstacle around the ego vehicle is mainly sensed by using a device like a ranging sensor (for example, a lidar, a millimeter-wave radar, and an ultrasonic radar) installed on the periphery of the vehicle. However, the ranging sensor installed on the periphery of the vehicle has a detection blind area.

Therefore, how a vehicle performs ranging on an obstacle in a detection blind area is one of problems to be urgently resolved by a person skilled in the art.

## SUMMARY

Embodiments of this application provide a ranging method and apparatus used for a vehicle, so that the vehicle can perform ranging on an obstacle in a detection blind area. To achieve the foregoing objective, the following technical solutions are used in embodiments of this application.

According to a first aspect, an embodiment of this application provides a ranging method, applied to a vehicle. The vehicle includes a first camera and a second camera. The method includes: first obtaining a first image and a second image; then obtaining a first depth map and a second depth map; and subsequently determining a distance between an object in the first image and the vehicle and/or a distance between an object in the second image and the vehicle based on the first depth map and the second depth map, and determining the distance between the object in the first image and the vehicle and/or the distance between the object in the second image and the vehicle based on the first depth map and the second depth map. The first image is an image captured by the first camera, the second image is an image captured by the second camera, the first camera and the second camera have a common view area, the first camera is a fisheye camera, the second camera is a pinhole camera, the first depth map is a depth map corresponding to the first image, and the second depth map is a depth map corresponding to the second image.

According to the ranging method provided in this embodiment of this application, the first depth map and the second depth map are obtained by using the first image captured by the fisheye camera with a relatively large field of view and the second image captured by the pinhole camera that has the common view area with the camera, and then the distance between the object in the first image and the vehicle and/or the distance between the object in the second image and the vehicle are/is determined based on the first depth map and the second depth map. The fisheye camera with the relatively large field of view can compensate for an inherent blind area of a ranging sensor layout, so that the vehicle can perform ranging on an obstacle (for example, a floating obstacle) in the detection blind area.

It should be noted that, that different cameras have a common view area means that field-of-view areas of the different cameras have an intersection or overlapping area.

In a possible implementation, the first image and the second image may be input into a target network, to obtain the first depth map and the second depth map.

It can be learned that the first image and the second image are input into the target network to obtain the first depth map and the second depth map, and then the distance between the object in the first image and the vehicle and the distance between the object in the second image and the vehicle are determined based on the first depth map and the second depth map. The fisheye camera with the relatively large field of view can compensate for an inherent blind area of a ranging sensor layout, so that the vehicle can perform ranging on an obstacle (for example, a floating obstacle) in the detection blind area.

Optionally, the first camera may be a fisheye camera whose field of view is greater than a preset angle. For example, the preset angle is 180 degrees or 192 degrees.

It should be noted that some objects (for example, a floating obstacle) may not be located in the common view area of the first camera and the second camera, but exist independently in a field of view of the first camera or the second camera, that is, exist independently in the first image or the second image. Distances between these objects and the vehicle may be determined by using the first depth map and the second depth map.

In a possible implementation, a first feature map and a second feature map may be obtained. Then, a third feature map is obtained based on a first feature point in the first feature map and a plurality of target feature points corresponding to the first feature point. Subsequently, a fourth feature map is obtained based on a second feature point in the second feature map and a plurality of target feature points corresponding to the second feature point. Then, the first depth map and the second depth map are obtained based on the third feature map and the fourth feature map. The first feature map is a feature map corresponding to the first image, and the second feature map is a feature map corresponding to the second image. The first feature point is any feature point in the first feature map, and the plurality of target feature points corresponding to the first feature point are feature points that are in the second feature map and that conform to an epipolar constraint with the first feature point. The second feature point is any feature point in the second feature map, and the plurality of target feature points corresponding to the second feature point are feature points that are in the first feature map and that conform to an epipolar constraint with the second feature point.

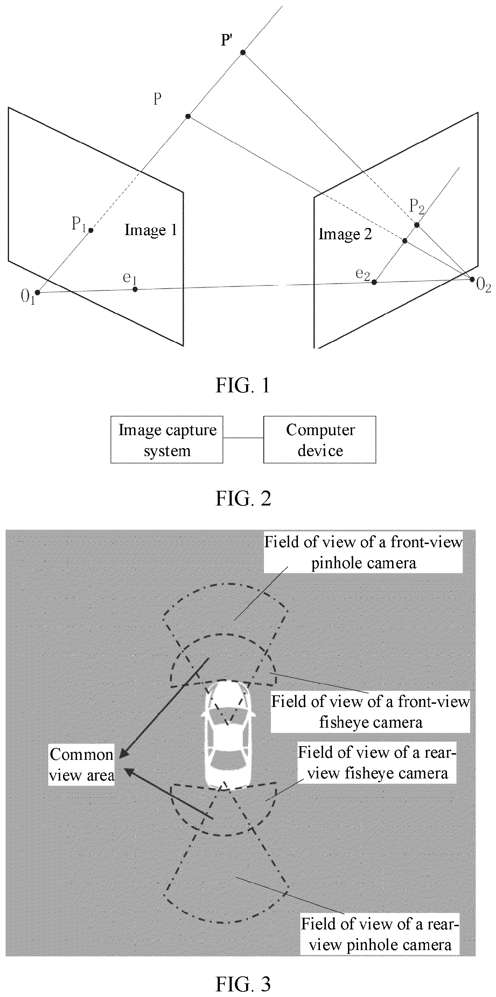

The epipolar constraint describes a constraint formed by image points and camera optical centers in a projection model when a same point is projected onto two images with different angles of view. FIG. 1 is used as an example. For a spatial point P or P' on a light ray along an optical center O1 of a pinhole camera and an image point P1 in an image 1, an image point P2 of the spatial point P or P' in an image 2 is definitely on an epipolar line e2P2. This is expressed as that the image point P1 and the image point P2 conform to the epipolar constraint. For a heterogeneous pinhole and fisheye camera pair, an epipolar line may not be a straight line, but may be a curve. e1 is an intersection point between a plane of the image 1 and a connection line 0102 between camera optical centers corresponding to the two images, and e2 is an intersection point between a plane of the image 2 and the connection line 0102 between the camera optical centers corresponding to the two images.

Compared with performing feature matching on a feature point by using all feature points, performing feature matching on a feature point by using a target feature point that conforms to an epipolar constraint in an image having a common view area with an image corresponding to the feature point can reduce a calculation amount in a feature matching process. In addition, because the feature point that conforms to the epipolar constraint in the image having the common view area with the image corresponding to the feature point has a relatively high similarity with the feature point, performing feature matching on the feature point by using the target feature point of the feature point can fuse a feature of the target feature point into a matched feature point, thereby increasing a recognition degree of the feature point, so that the target network can more accurately obtain a corresponding depth map based on a feature map obtained through feature fusion, and ranging accuracy is improved. There is an epipolar constraint between a pixel in the first image and a pixel in the second image, there is a correspondence between a pixel in the first image and a feature point in the first feature map, and there is a correspondence between a pixel in the second image and a feature point in the second feature map. Therefore, an epipolar constraint relationship between a feature point in the first feature map and a feature point in the second feature map can be determined.

For example, the first image shot by the fisheye camera and the second image shot by the pinhole camera are obtained. The first feature map corresponding to the first image is flattened into a one-dimensional feature represented as [a0, a1, ..., aH1xW1] with a length of H1xW1, and the second feature map corresponding to the second image is flattened into a one-dimensional feature represented as [b0, b1, ..., bH2xW2] with a length of H2xW2. Further, the two features are spliced into a one-dimensional feature C=[a0, a1, ..., aH1xW1, b0, b1, ..., bH2xW2]. Then, a network is used to map the one-dimensional feature C into three features: Q, K, and V. Dimensions of the three features are the same as that of C. It is assumed that for a feature bi whose index position is i in the second feature map, after calculation based on an epipolar constraint, the feature bi has n feature index positions in a corresponding depth range (dmin, dmax) in the first feature map, which are respectively {ad0, ad1, ..., adn}. Therefore, an element qii corresponding to a pinhole image feature index position i in Q does not need to be dot-multiplied by all elements in K whose length is H1xW1+H2xW2, but only needs to be dot-multiplied by n elements corresponding to {ad0, ad1, ..., adn} one by one to obtain products of qii and the n elements. Then, S=[s1, s2, ..., sn] is obtained through a softmax operation. Finally, a weighted summation operation is performed with n elements corresponding to {ad0, ad1, ..., adn} in V, to obtain a fused feature bi' corresponding to bi. The foregoing operations are performed on each feature point to obtain a one-dimensional feature C', and then the one-dimensional feature C' is split and converted into the third feature map corresponding to the first feature map and the fourth feature map corresponding to the second feature map based on a splicing order of C.

Optionally, the target feature point may alternatively be the feature point that conforms to the epipolar constraint in the image having the common view area with the image corresponding to the feature point and a feature point around the feature point that conforms to the epipolar constraint.

It should be noted that, performing expansion processing in a specific range on a position of the target feature point can improve robustness of a slight change of a camera extrinsic parameter. An example in which the computer device obtains the first image shot by the fisheye camera and the second image shot by the pinhole camera is used. The first feature map corresponding to the first image is flattened into a one-dimensional feature represented as [a0, a1, ...,

aH1xW1] with a length of H1xW1, and the second feature map corresponding to the second image is flattened into a one-dimensional feature represented as [b0, b1, ..., bH2xW2] with a length of H2xW2. Further, the two features are spliced into a one-dimensional feature C=[a0, a1, ..., aH1xW1, b0, b1, ..., bH2xW2]. Then, a network is used to map the one-dimensional feature C into three features: Q, K, and V It is assumed that for a feature bi whose index position is i in the second feature map, after calculation based on an epipolar constraint, the feature bi has n feature index positions in a corresponding depth range (dmin, dmax) in the first feature map, which are respectively {ad0, ad1, ..., adn}. After expansion processing, there are m candidate points. An overall representation is {ad0, ad1, ..., adn, adn+1, ..., adn+m}. Therefore, an element qii corresponding to a pinhole image feature index position i in Q does not need to be dot-multiplied by all elements in K whose length is H1xW1+H2xW2, but only needs to be dot-multiplied by n+m elements corresponding to {ad0, ad1, ..., adn, adn+1, ..., adn+m} one by one to obtain products of qii and the n+m elements. Then, S=[s1, s2, ..., sn+m] is obtained through a softmax operation. Finally, a weighted summation operation is performed with n+m elements corresponding to {ad0, ad1, ..., adn, adn+1, ..., adn+m} in V, to obtain a fused feature bi' corresponding to bi.

In a possible implementation, the distance between the object in the first image and the vehicle and/or the distance between the object in the second image and the vehicle may be determined based on the first depth map, the second depth map, first structural semantics, and second structural semantics, where the first structural semantics indicates an object edge and a plane in the first image, and the second structural semantics indicates an object edge and a plane in the second image.

It may be understood that the first image and the second image have a common view area, and the first image and the second image may have a same object. Because a depth of a pixel in a depth map is relative to a camera coordinate system corresponding to an image in which the pixel is located, a deviation may exist when depths of a same pixel in different camera coordinate systems are converted into a unified coordinate system established by using the vehicle. The deviation may affect accuracy of a distance between an edge point and the vehicle. Therefore, same pixels of different cameras may be aligned in the unified coordinate system by using structural semantics that represents an edge and a planar structure of each object in the image, to eliminate the deviation, so as to improve ranging precision.

In a possible implementation, the first image, the first feature map, or the third feature map may be input into the target network, to obtain the first structural semantics. Then, the second image, the second feature map, or the fourth feature map is input into the target network, to obtain the second structural semantics. When the third feature map is used as an input, the obtained first structural semantics may be more accurate because the third feature map is a feature map obtained through fusion based on an epipolar constraint. Similarly, when the fourth feature map is used as an input, the obtained second structural semantics may also be more accurate.

It can be learned that the target network may further output, based on an image or a feature map, an object edge and a plane in the image corresponding to the feature map. Because the first image and the second image have a common view area, the first image and the second image may have a same object. Because a depth of a pixel in a depth map is relative to a camera coordinate system corresponding to an image in which the pixel is located, a deviation may exist when depths of a same pixel in different camera coordinate systems are converted into a unified coordinate system established by using the vehicle. The deviation may affect accuracy of a distance between an edge point and the vehicle. Therefore, same pixels of different cameras may be aligned in the unified coordinate system by using structural semantics that represents an edge and a planar structure of each object in the image, to eliminate the deviation, so as to improve ranging precision.

Optionally, the first image is an image captured by the first camera at a first moment, and the second image is an image captured by the second camera at the first moment.

In a possible implementation, the distance between the object in the first image and the vehicle and/or the distance between the object in the second image and the vehicle may be determined based on the first depth map, the second depth map, a first instance segmentation result, a second instance segmentation result, first distance information, and second distance information. The first instance segmentation result indicates a background and a movable object in the first image, the second instance segmentation result indicates a background and a movable object in the second image, the first distance information indicates a distance between an object in a third image and the vehicle, the third image is an image captured by the first camera at a second moment, the second distance information indicates a distance between an object in a fourth image and the vehicle, and the fourth image is an image captured by the second camera at the second moment.

It may be understood that the first image and the second image have a common view area, and the first image and the second image may have a same object. Because a depth of a pixel in a depth map is relative to a camera coordinate system corresponding to an image in which the pixel is located, a deviation may exist when depths of a same pixel in different camera coordinate systems are converted into a unified coordinate system established by using the vehicle. The deviation may affect accuracy of a distance between an edge point and the vehicle. Therefore, a distance between each object in the first image and the vehicle may be corrected by representing the distance between the object in the third image captured by the first camera at the second moment in the image and the vehicle and the instance segmentation result of the first image and by using fixed backgrounds in the two images as a reference, and a distance between each object in the second image and the vehicle may be corrected by representing the distance between the object in the fourth image captured by the second camera at the second moment in the image and the vehicle and the instance segmentation result of the second image and by using the fixed backgrounds in the two images as a reference, so that same pixels of different cameras may be aligned in the unified coordinate system, to eliminate the deviation, so as to improve ranging precision.

In a possible implementation, the first image, the first feature map, or the third feature map may be input into the target network, to obtain the first instance segmentation. Then, the second image, the second feature map, or the fourth feature map is input into the target network, to obtain the second instance segmentation result. When the third feature map is used as an input, the obtained first instance segmentation may be more accurate because the third feature map is a feature map obtained through fusion based on an epipolar constraint. Similarly, when the fourth feature map is used as an input, the obtained second instance segmentation may also be more accurate.

It can be learned that the target network may further output, based on a feature map, an instance segmentation result of an image corresponding to the feature map. Because the first image and the second image have a common view area, the first image and the second image may have a same object. Because a depth of a pixel in a depth map is relative to a camera coordinate system corresponding to an image in which the pixel is located, a deviation may exist when depths of a same pixel in different camera coordinate systems are converted into a unified coordinate system established by using the vehicle. The deviation may affect accuracy of a distance between an edge point and the vehicle. Therefore, a distance between each object in the first image and the vehicle may be corrected by representing the distance between the object in the third image captured by the first camera at the second moment in the image and the vehicle and the instance segmentation result of the first image and by using fixed backgrounds in the two images as a reference, and a distance between each object in the second image and the vehicle may be corrected by representing the distance between the object in the fourth image captured by the second camera at the second moment in the image and the vehicle and the instance segmentation result of the second image and by using the fixed backgrounds in the two images as a reference, so that same pixels of different cameras may be aligned in the unified coordinate system, to eliminate the deviation, so as to improve ranging precision.

In a possible implementation, the first image may be calibrated based on an intrinsic parameter of the first camera and a preset fisheye camera intrinsic parameter. Then, a depth map corresponding to a calibrated first image is obtained based on the calibrated first image, to determine the distance between the object and the vehicle.

It should be noted that, due to a deviation caused by a process during manufacturing of a camera module, parameters of different cameras may have a deviation. Therefore, the first image captured by the first camera may be calibrated by using the preset fisheye camera intrinsic parameter, to eliminate the deviation, thereby further improving ranging precision.

In a possible implementation, the second image may be calibrated based on an intrinsic parameter of the second camera and a preset pinhole camera intrinsic parameter. Then, a depth map corresponding to a calibrated second image is obtained based on the calibrated second image, to determine the distance between the object and the vehicle.

It should be noted that, due to a deviation caused by a process during manufacturing of a camera module, parameters of different cameras may have a deviation. Therefore, the second image captured by the second camera may be calibrated by using the preset pinhole camera intrinsic parameter, to eliminate the deviation, thereby further improving ranging precision.

In a possible implementation, three-dimensional reconstruction may be performed on the object in the first image and the object in the second image based on the distance between the object in the first image and the vehicle and the distance between the object in the second image and the vehicle. Three-dimensional reconstructed objects are displayed.

It may be understood that, three-dimensional reconstruction is performed on the object in the first image and/or the object in the second image based on the distance between the object in the first image and the vehicle and/or the distance between the object in the second image and the vehicle, and the three-dimensional reconstructed objects are displayed. This helps the user more intuitively learn of a position relationship between the object in the first image and the vehicle and/or a position relationship between the object in the second image and the vehicle.

In a possible implementation, prompt information may be displayed based on the distance between the object in the first image and the vehicle and the distance between the object in the second image and the vehicle.

For example, when the distance between the object in the first image and the vehicle is less than a distance threshold, collision alarm prompt information is displayed to remind the user that the vehicle may collide with the object in the first image.

For another example, when the distance between the object in the second image and the vehicle is less than a distance threshold, distance prompt information is displayed to remind the user that the vehicle is relatively close to the object in the second image.

It may be understood that, the prompt information is displayed based on the distance between the object in the first image and the vehicle and the distance between the object in the second image and the vehicle, so that the user can be reminded when the object in the image is relatively close to the vehicle, and the user can perform timely processing, thereby avoiding collision between the vehicle and the object in the image.

In a possible implementation, the distance between the object in the first image and the vehicle and/or the distance between the object in the second image and the vehicle are/is a distance between the object in the first image and an equidistant contour of the vehicle and/or a distance between the object in the second image and the equidistant contour of the vehicle. The equidistant contour of the vehicle is an equidistant contour that is set based on an outer contour of the vehicle. The equidistant contour may be a two-dimensional (2D) equidistant line extending outward from an outer contour line of the vehicle body in a top view, or may be a three-dimensional (3D) equidistant curved surface extending outward from a three-dimensional outer contour of the vehicle body.

In a possible implementation, the equidistant contour of the vehicle may be adjusted based on the distance between the object in the first image and the vehicle and the distance between the object in the second image and the vehicle.

For example, when the distance between the object in the image and the vehicle is less than or equal to 0.5 m, a color of the equidistant contour is adjusted to yellow.

For another example, when the distance between the object in the image and the vehicle is less than or equal to 0.2 m, a color of the equidistant contour is adjusted to red.

In a possible implementation, the first camera may be a rear-view fisheye camera, and the second camera may be a rear-view pinhole camera.

In a possible implementation, the first camera may be a front-view fisheye camera, and the second camera may be a front-view pinhole camera.

In a possible implementation, the first camera may be a left-view fisheye camera, and the second camera may be a left-view pinhole camera.

In a possible implementation, the first camera may be a right-view fisheye camera, and the second camera may be a right-view pinhole camera.

According to a second aspect, an embodiment of this application provides a ranging apparatus, used in a vehicle including a first camera and a second camera. The ranging apparatus includes an obtaining unit, a network unit, and a determining unit. The obtaining unit is configured to obtain a first image and a second image, where the first image is an image captured by the first camera, the second image is an image captured by the second camera, the first camera and the second camera have a common view area, the first camera is a fisheye camera, and the second camera is a pinhole camera. The network unit is configured to obtain a first depth map and a second depth map, where the first depth map is a depth map corresponding to the first image, and the second depth map is a depth map corresponding to the second image. The determining unit is configured to determine a distance between an object in the first image and the vehicle and/or a distance between an object in the second image and the vehicle based on the first depth map and the second depth map.

In a possible implementation, the network unit is specifically configured to: obtain a first feature map and a second feature map, where the first feature map is a feature map corresponding to the first image, and the second feature map is a feature map corresponding to the second image; obtain a third feature map based on a first feature point in the first feature map and a plurality of target feature points corresponding to the first feature point, where the first feature point is any feature point in the first feature map, and the plurality of target feature points corresponding to the first feature point are feature points that are in the second feature map and that conform to an epipolar constraint with the first feature point; obtain a fourth feature map based on a second feature point in the second feature map and a plurality of target feature points corresponding to the second feature point, where the second feature point is any feature point in the second feature map, and the plurality of target feature points corresponding to the second feature point are feature points that are in the first feature map and that conform to an epipolar constraint with the second feature point; and obtain the first depth map and the second depth map based on the third feature map and the fourth feature map.

In a possible implementation, the determining unit is specifically configured to determine the distance between the object in the first image and the vehicle and/or the distance between the object in the second image and the vehicle based on the first depth map, the second depth map, first structural semantics, and second structural semantics, where the first structural semantics indicates an object edge and a plane in the first image, and the second structural semantics indicates an object edge and a plane in the second image.

Optionally, the first image is an image captured by the first camera at a first moment.

In a possible implementation, the determining unit is specifically configured to determine the distance between the object in the first image and the vehicle and/or the distance between the object in the second image and the vehicle based on the first depth map, the second depth map, a first instance segmentation result, a second instance segmentation result, first distance information, and second distance information, where the first instance segmentation result indicates a background and a movable object in the first image, the second instance segmentation result indicates a background and a movable object in the second image, the first distance information indicates a distance between an object in a third image and the vehicle, the third image is an image captured by the first camera at a second moment, the second distance information indicates a distance between an object in a fourth image and the vehicle, and the fourth image is an image captured by the second camera at the second moment.

In a possible implementation, the obtaining unit is further configured to calibrate the first image based on an intrinsic parameter of the first camera and a preset fisheye camera intrinsic parameter.

In a possible implementation, the obtaining unit is further configured to calibrate the second image based on an intrinsic parameter of the second camera and a preset pinhole camera intrinsic parameter.

In a possible implementation, the determining unit is further configured to: perform three-dimensional reconstruction on the object in the first image and the object in the second image based on the distance between the object in the first image and the vehicle and the distance between the object in the second image and the vehicle; and display three-dimensional reconstructed objects.

In a possible implementation, the determining unit is further configured to display prompt information based on the distance between the object in the first image and the vehicle and the distance between the object in the second image and the vehicle.

According to a third aspect, an embodiment of this application further provides a ranging apparatus. The ranging apparatus includes one or more processors, and when the one or more processors execute program code or instructions, the method in the first aspect or any possible implementation of the first aspect is implemented.

Optionally, the ranging apparatus may further include one or more memories, and the one or more memories are configured to store the program code or the instructions.

According to a fourth aspect, an embodiment of this application further provides a chip, including an input interface, an output interface, and one or more processors. Optionally, the chip further includes a memory. The one or more processors are configured to execute code in the memory. When the one or more processors execute the code, the chip implements the method in the first aspect or any possible implementation of the first aspect.

Optionally, the chip may be an integrated circuit.

According to a fifth aspect, an embodiment of this application further provides a computer-readable storage medium, configured to store a computer program. The computer program is used to implement the method in the first aspect or any possible implementation of the first aspect.

According to a sixth aspect, an embodiment of this application further provides a computer program product including instructions. When the computer program product runs on a computer, the computer is enabled to implement the method in the first aspect or any possible implementation of the first aspect.

According to a seventh aspect, an embodiment of this application further provides a ranging apparatus, including an obtaining unit, a network unit, and a determining unit. The obtaining unit is configured to obtain a first image and a second image, where the first image is an image captured by a first camera, the second image is an image captured by a second camera, the first camera and the second camera have a common view area, the first camera is a fisheye camera, and the second camera is a pinhole camera. The network unit is configured to obtain a first depth map and a second depth map, where the first depth map is a depth map corresponding to the first image, and the second depth map is a depth map corresponding to the second image. The determining unit is configured to determine a distance between an object in the first image and a vehicle and/or a distance between an object in the second image and the vehicle based on the first depth map and the second depth map. The ranging apparatus is further configured to implement the method in the first aspect or any possible implementation of the first aspect.

According to an eighth aspect, an embodiment of this application provides a ranging system, including one or more first cameras, one or more second cameras, and a computing device. The one or more first cameras are configured to obtain a first image, the one or more second cameras are configured to obtain a second image, and the computing device is configured to perform ranging based on the first image and the second image by using the method in the first aspect or any possible implementation of the first aspect.

According to a ninth aspect, an embodiment of this application provides a vehicle. The vehicle includes one or more fisheye cameras, one or more pinhole cameras, and one or more processors, and the one or more processors implement the method in the first aspect or any possible implementation of the first aspect. Optionally, the vehicle further includes a display, configured to display information such as a road condition, distance prompt information, a two-dimensional/three-dimensional model of the vehicle, or a two-dimensional/three-dimensional model of an obstacle. Optionally, the vehicle further includes a speaker, configured to play voice prompt information. The voice prompt information may include information such as a danger prompt and/or a distance between the vehicle and an obstacle. For example, when the distance between the vehicle and the obstacle is less than a preset threshold, a voice is made to prompt a driver to pay attention to existence of the obstacle. The vehicle may remind the driver only by displaying prompt information on the display, or may remind the driver only by using voice prompt information, or may remind the driver by using display information on the display and a voice prompt together. For example, when the distance between the vehicle and the obstacle is less than a first threshold, only prompt information is displayed on the display; or when the distance between the vehicle and the obstacle is less than a second threshold (the second threshold is less than the first threshold), during display, a voice is made to prompt the driver to pay attention to the obstacle, to draw attention of the driver.

The ranging apparatus, the computer storage medium, the computer program product, and the chip provided in the embodiments are all configured to perform the method provided above. Therefore, for beneficial effects that can be achieved, refer to beneficial effects in the method provided above. Details are not described herein again.

## BRIEF DESCRIPTION OF DRAWINGS

To describe technical solutions in embodiments of this application more clearly, the following briefly describes the accompanying drawings for describing the embodiments. It is clear that the accompanying drawings in the following descriptions show merely some embodiments of this application, and a person of ordinary skill in the art may still derive other drawings from these accompanying drawings without creative efforts.

FIG. 1 is a diagram of an image according to an embodiment of this application;
FIG. 2 is a diagram of a structure of a ranging system according to an embodiment of this application;
FIG. 3 is a diagram of a structure of an image capture system according to an embodiment of this application;
FIG. 4 is a schematic flowchart of a ranging method according to an embodiment of this application;
FIG. 5 is a diagram of a structure of a target network according to an embodiment of this application;
FIG. 6 is a diagram of extracting an image feature according to an embodiment of this application;
FIG. 7 is a diagram of pixel alignment according to an embodiment of this application;
FIG. 8 is a diagram of a ranging scenario according to an embodiment of this application;
FIG. 9 is a diagram of a display interface according to an embodiment of this application;
FIG. 10 is a diagram of another display interface according to an embodiment of this application;
FIG. 11 is a diagram of another ranging scenario according to an embodiment of this application;
FIG. 12 is a diagram of still another display interface according to an embodiment of this application;
FIG. 13 is a diagram of still another display interface according to an embodiment of this application;
FIG. 14 is a diagram of still another display interface according to an embodiment of this application;
FIG. 15 is a diagram of still another display interface according to an embodiment of this application;
FIG. 16 is a diagram of still another display interface according to an embodiment of this application;
FIG. 17 is a diagram of still another display interface according to an embodiment of this application;
FIG. 18 is a diagram of still another display interface according to an embodiment of this application;
FIG. 19 is a diagram of a structure of a ranging apparatus according to an embodiment of this application;
FIG. 20 is a diagram of a structure of a chip according to an embodiment of this application; and
FIG. 21 is a diagram of a structure of an electronic device according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are merely some rather than all of embodiments of this application. Based on embodiments of this application, all other embodiments obtained by a person of ordinary skill in the art without creative efforts fall within the protection scope of embodiments of this application.

The term "and/or" in this specification is merely an association relationship of associated objects, and indicates that three relationships may exist. For example, A and/or B may indicate the following three cases: Only A exists, both A and B exist, and only B exists.

In the specification and the accompanying drawings of embodiments of this application, the terms "first", "second", and the like are intended to distinguish between different objects or distinguish between different processing for a same object, but do not describe a particular order of the objects.

In addition, the terms "include", "have", and any variants thereof mentioned in descriptions of embodiments of this application are intended to cover a non-exclusive inclusion. For example, a process, method, system, product, or device that includes a series of steps or units is not limited to the listed steps or units, but optionally further includes another unlisted step or unit, or optionally further includes another inherent step or unit for the process, method, product, or device.

It should be noted that, in descriptions of embodiments of this application, words such as "example" or "for example" are used to represent giving examples, illustrations, or descriptions. Any embodiment or design solution described as "example" or "for example" in embodiments of this application should not be construed as being more preferential or advantageous than other embodiments or design solutions. Specifically, the words such as "example" or "for example" are used to present related concepts in a specific manner.

In descriptions of embodiments of this application, unless otherwise stated, "a plurality of" means two or more.

Image distortion: Image distortion means that distortion is caused due to deviations in lens manufacturing accuracy and assembly technologies, resulting in distortion of an original image. Currently, de-distortion is usually needed when a camera is used, especially a fisheye camera. If de-distortion is not performed, target size distribution in an original image of the camera is uneven. This causes great interference to a perception algorithm. Therefore, the original image needs to be de-distorted. However, information may be lost after the original image is de-distorted. The information loss is fatal in self-driving and thus results in potential risks of traffic accidents.

Epipolar constraint: describes a constraint formed by image points and camera optical centers in a projection model when a same point is projected onto two images with different angles of view.

As shown in FIG. 1, for a spatial point P or P' on a light ray along an optical center O1 of a pinhole camera and an image point P1 in an image 1, an image point P2 of the spatial point P or P' in an image 2 is definitely on an epipolar line e2P2. This is expressed as the epipolar constraint. For a heterogeneous pinhole and fisheye camera pair, an epipolar line may not be a straight line, but may be a curve. e1 is an intersection point between a plane of the image 1 and a connection line 0102 between camera optical centers corresponding to the two images, and e2 is an intersection point between a plane of the image 2 and the connection line 0102 between the camera optical centers corresponding to the two images.

Common view area: means that field-of-view areas have an intersection or overlapping range.

Feature fusion: For example, a feature map 2 and a feature map 3 corresponding to two images are fused. The feature map 2 is flattened into a one-dimensional feature represented as [a0, a1, ..., aH1xW1] with a length of H1xW1. The feature map 3 is flattened into a one-dimensional feature represented as [b0, b1, ..., bH2xW2] with a length of H2xW2. Further, the two features are spliced into a one-dimensional feature C=[a0, a1, ..., aH1xW1, b0, b1, ..., bH2xW2]. Then, an MLP network is used to map the feature C into three features: Q, K, and V Dimensions of the three features are the same as that of C. Then, the three features obtained through mapping are input into a transformer network. In a related technology, in the transformer network, a fused feature C' is obtained according to C'=softmax(QKT/sqrt(dk))V (where dk=H1xW1+H2xW2). Then, the fused feature C' is split into a fused feature map 2 corresponding to the feature map 2 and a fused feature map 3 corresponding to the feature map 3. QKT represents a dot product of vectors.

It can be learned that, in a feature fusion process in the related technology, a matching operation needs to be performed between a feature point on any camera by default and feature points on all cameras. In this case, not only a calculation amount is large, but also irrelevant image information affects a network in learning a fused feature.

In the related technology, a disparity estimation method is mainly used to perform depth estimation on a plurality of images having an overlapping area. In the disparity estimation method, a corresponding pixel, in another image, of each pixel in the image overlapping area needs to be determined, a disparity between the pixel and the corresponding pixel needs to be calculated, and then a depth of the pixel is obtained through calculation by using the disparity between the pixel and the corresponding pixel.

It can be learned that in the disparity estimation method, depths of all pixels in the overlapping area can be calculated by using disparities. However, because a pixel outside the overlapping area in an image does not have a corresponding pixel in another image, a disparity of the pixel outside the overlapping area in the image cannot be obtained, and a depth of the pixel outside the overlapping area in the image cannot be calculated.

Therefore, embodiments of this application provide a ranging method, so that depth estimation can be performed on a plurality of images having an overlapping area. The method is applicable to a ranging system. FIG. 2 shows a possible existence form of the ranging system.

As shown in FIG. 2, the ranging system includes an image capture system and a computer device. The image capture system and the computer device may communicate in a wired or wireless manner.

The image capture system is configured to capture a first image and a second image having a common view area.

The computer device is configured to determine distances between a vehicle and objects in the first image and the second image based on the first image and the second image that are captured by the image capture system and that have the common view area.

The image capture system may include a plurality of cameras having a common view area.

The image capture system includes a first camera, and the first camera is a camera whose field of view is greater than a preset angle.

For example, the preset angle may be 180 degrees or 192 degrees.

In a possible implementation, the plurality of cameras may be cameras of a same specification.

For example, the image capture system may include a plurality of fisheye cameras.

In another possible implementation, the plurality of cameras may be cameras of different specifications.

For example, the image capture system may include one or more fisheye cameras and one or more pinhole cameras.

In a possible implementation, the image capture system may be disposed on the vehicle.

The vehicle may be a land vehicle or a non-land vehicle.

The land vehicle may include a small car, a full-size sport utility vehicle (sport utility vehicle, SUV), a lorry, a truck, a van, a bus, a motorcycle, a bicycle, a scooter, a train, a snowmobile, a wheeled vehicle, a tracked vehicle, or a rail vehicle.

The non-land vehicle may include an uncrewed aerial vehicle, an aircraft, a hovercraft, a spacecraft, a ship, or a sailing boat.

In a possible implementation, the image capture system may include four fisheye cameras (front-view, rear-view, left-view, and right-view) and six pinhole cameras (front-view, rear-view, left and right front side-view, and left and right rear side-view) arranged around a vehicle body, and the fisheye cameras and the pinhole cameras have a common view area.

As shown in FIG. 3, in a possible implementation, the image capture system may include a front-view pinhole camera, a front-view fisheye camera, a rear-view pinhole camera, and a rear-view fisheye camera that are arranged around the vehicle body. A field of view of the front-view pinhole camera and a field of view of the front-view fisheye camera have a common view area, and a field of view of the rear-view pinhole camera and a field of view of the rear-view fisheye camera have a common view area.

In another possible implementation, the image capture system may include a rear-view fisheye camera and a rear-view pinhole camera, and the two cameras have a common view area.

In still another possible implementation, the image capture system may include a front-view fisheye camera and a front-view pinhole camera, and the two cameras have a common view area.

In still another possible implementation, the image capture system may include a left-view fisheye camera and a left-view pinhole camera, and the two cameras have a common view area.

In still another possible implementation, the image capture system may include a right-view fisheye camera and a right-view pinhole camera, and the two cameras have a common view area.

The computer device may be a terminal or a server. The terminal may be a vehicle-mounted terminal, a smartphone, a tablet computer, a notebook computer, a desktop computer, a smart speaker, a smartwatch, a smart television, or the like, but is not limited thereto. The server may be an independent physical server, or may be a server cluster or a distributed system that includes a plurality of physical servers, or may be a cloud server that provides a cloud computing service.

The image capture system and the computer device may communicate in a wired or wireless manner.

It should be noted that, communication in the wireless manner may be implemented by using a communication network. The communication network may be a local area network, or may be a wide area network switched by using a relay device, or may include a local area network and a wide area network. When the communication network is the local area network, for example, the communication network may be a Wi-Fi hotspot network, a Wi-Fi P2P network, a Bluetooth network, a ZigBee network, a near field communication (near field communication, NFC) network, a future possible universal short range communication network, or a dedicated short range communication (dedicated short range communication, DSRC) network.

For example, the communication network may be a 3rd generation mobile communication technology (3rd generation wireless telephone technology, 3G) network, a 4th generation mobile communication technology (4th generation mobile communication technology, 4G) network, a 5th generation mobile communication technology (5th generation mobile communication technology, 5G) network, a public land mobile network (Public Land Mobile Network, PLMN), the internet, or the like. This is not limited in embodiments of this application.

A ranging method provided in embodiments of this application is described below with reference to the ranging system shown in FIG. 2.

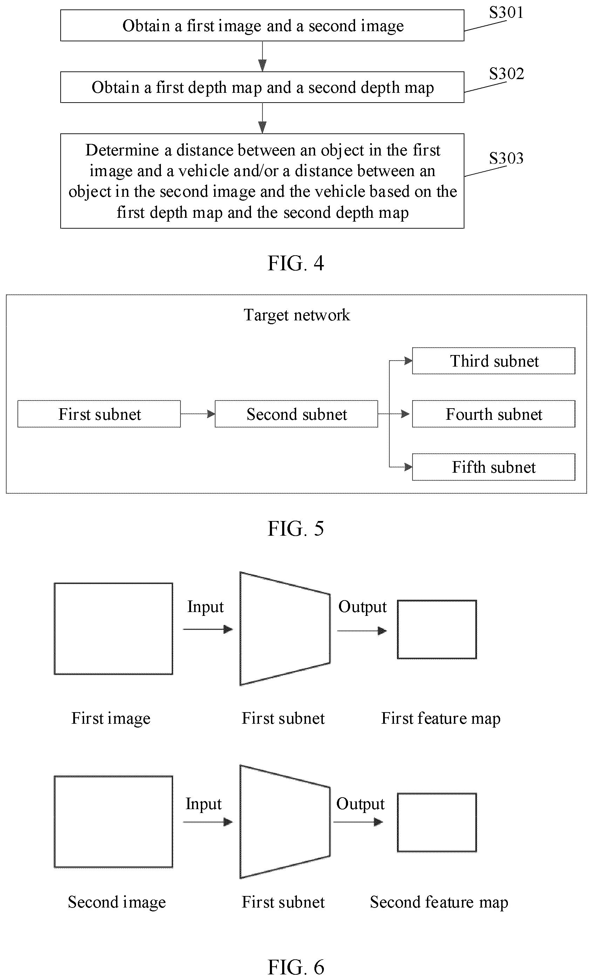

FIG. 4 shows a ranging method according to an embodiment of this application. The method is applied to a vehicle. The vehicle includes a first camera and a second camera. The method may be performed by a computer device in the foregoing ranging system. As shown in FIG. 4, the method includes the following steps.

S301: The computer device obtains a first image and a second image.

The first image is an image captured by the first camera, the second image is an image captured by the second camera, the first camera and the second camera have a common view area, the first camera is a fisheye camera, and the second camera is a pinhole camera.

It should be noted that the common view area means that field-of-view areas have an intersection or overlapping range.

Optionally, the first camera may be a camera whose field of view is greater than a preset angle. For example, the preset angle may be 180 degrees or 192 degrees.

For example, the computer device obtains, from an image capture system, the first image and the second image that are shot by the cameras.

For example, the computer device may obtain the first image and the second image that are shot by a front-view fisheye camera and a front-view pinhole camera that are arranged on a vehicle body. The front-view fisheye camera and the front-view pinhole camera have a common view area.

In a possible implementation, the computer device may alternatively obtain a plurality of groups of images, each group of images includes a first image and a second image, and photographic cameras of a first image and a second image in a same group have a common view area.

For example, the computer device obtains, from an image capture system including four fisheye cameras (front-view, rear-view, left-view, and right-view) and four pinhole cameras (front-view, rear-view, left-view, and right-view) that are arranged around the vehicle body, four groups of images shot by the eight cameras. A first group of images includes a first image 1 shot by the front-view fisheye camera and a second image 1 shot by the front-view pinhole camera, and the front-view fisheye camera and the front-view pinhole camera have a common view area. A second group of images includes a first image 2 shot by the rear-view fisheye camera and a second image 2 shot by the rear-view pinhole camera, and the rear-view fisheye camera and the rear-view pinhole camera have a common view area. A third group of images includes a first image 3 shot by the left-view fisheye camera and a second image 3 shot by the left-view pinhole camera, and the left-view fisheye camera and the left-view pinhole camera have a common view area. A fourth group of images includes a first image 4 shot by the right-view fisheye camera and a second image 4 shot by the right-view pinhole camera, and the right-view fisheye camera and the right-view pinhole camera have a common view area.

Optionally, the computer device may obtain a plurality of groups of images shot by the image capture system in a period of time. A plurality of first images in a same group are captured at a same time, and first images in different groups are captured at different times.

For example, the computer device may obtain five groups of images, where capture times of both a first image and a second image in a first group of images are 10:00:00, capture times of both a first image and a second image in a second group of images are 10:00:01, capture times of both a first image and a second image in a third group of images are 10:00:02, capture times of both a first image and a second image in a fourth group of images are 10:00:03, and capture times of both a first image and a second image in a fifth group of images are 10:00:04.

Optionally, the computer device may further calibrate coordinates of a pixel in each image based on an intrinsic parameter of a camera corresponding to each image and a preset camera intrinsic parameter.

For example, the first image is calibrated based on an intrinsic parameter of the first camera and a preset fisheye camera intrinsic parameter.

For another example, the second image is calibrated based on an intrinsic parameter of the second camera and a preset pinhole camera intrinsic parameter.

Camera intrinsic parameters of a fisheye camera (for example, a fisheye camera of a Kannala-Brandt camera mode (Kannala-Brandt Camera Mode, KB) model) include a focal length (fx, fy), an imaging center position (cx, cy), and a distortion parameter (k1, k2, k3, k4).

Camera intrinsic parameters of a pinhole camera include a focal length (fx, fy), an imaging center position (cx, cy), and a corresponding distortion parameter. The distortion parameter includes a radial distortion coefficient (k1, k2, k3) and a tangential distortion coefficient (p1, p2).

Extrinsic parameters of a camera are relative to a preset coordinate system. The parameters are a three-dimensional position offset (x, y, z) and an included angle (yaw, pitch, roll) between a camera optical axis and a coordinate axis. For example, the preset coordinate system may be a vehicle body coordinate system established relative to the vehicle.

For example, according to coordinates (u, v) of each pixel in an image captured by the pinhole camera or the fisheye camera and a formula $\begin{cases} u = f_x x_{distorted} + c_x \\ v = f_y y_{distorted} + c_y \end{cases}$ of an imaging process of a standard pinhole model, coordinates (xdistorted, ydistorted) of a distorted point on a unit depth plane are solved through inverse projection.

Then, an undistorted point (x, y) on the unit depth plane is solved through inverse distortion transformation by using $\begin{cases} x_{distorted} = x(1 + k_1 r^2 + k_2 r^4 + k_3 r^6) + 2p_1 xy + p_2(r^2 + 2x^2) \\ y_{distorted} = x(1 + k_1 r^2 + k_2 r^4 + k_3 r^6) + 2p_2 xy + p_1(r^2 + 2y^2) \end{cases}$, $r^2 = x^2 + y^2$.

Then, coordinates (x, y) of the undistorted point on the unit depth plane are applied to an imaging process subject to an intrinsic parameter of a camera corresponding to a template camera system (after distortion and projection transformation), and then calibrated coordinates (u', v') of the pixel are obtained based on the coordinates of the undistorted point and the preset camera intrinsic parameter. In this way, a correspondence between coordinates for pixel calibration and calibrated coordinates of a pixel is established, and each pixel in the first image and the second image is converted according to the correspondence, to calibrate a camera image (the first image and the second image) into an image of a template camera.

Optionally, in the foregoing calibration process, smoothing may also be performed on a calibrated image according to an interpolation algorithm.

It should be noted that, due to a deviation caused by a process during manufacturing of a camera module, parameters of different image capture systems may have a deviation. To ensure consistency of ranging precision of different image capture systems and facilitate training of a depth estimation model, an image may be calibrated into an image of the template camera system. A pixel of the camera image is back-projected onto the unit depth plane to simulate a real light incidence route, and then projected onto the template camera.

S302: The computer device obtains a first depth map and a second depth map.

The first depth map is a depth map corresponding to the first image, and the second depth map is a depth map corresponding to the second image.

In a possible implementation, the computer device may obtain a first feature map and a second feature map. Then, a third feature map is obtained based on a first feature point in the first feature map and a plurality of target feature points corresponding to the first feature point. Subsequently, a fourth feature map is obtained based on a second feature point in the second feature map and a plurality of target feature points corresponding to the second feature point. Then, the first depth map and the second depth map are obtained based on the third feature map and the fourth feature map. The first feature map is a feature map corresponding to the first image, and the second feature map is a feature map corresponding to the second image. The first feature point is any feature point in the first feature map, and the plurality of target feature points corresponding to the first feature point are feature points that are in the second feature map and that conform to an epipolar constraint with the first feature point. The second feature point is any feature point in the second feature map, and the plurality of target feature points corresponding to the second feature point are feature points that are in the first feature map and that conform to an epipolar constraint with the second feature point.

Compared with performing feature matching on a feature point by using all feature points, performing feature matching on a feature point by using a target feature point that conforms to an epipolar constraint in an image having a common view area with an image corresponding to the feature point can reduce a calculation amount in a feature matching process. In addition, because the feature point that conforms to the epipolar constraint in the image having the common view area with the image corresponding to the feature point has a relatively high similarity with the feature point, performing feature matching on the feature point by using the target feature point of the feature point can fuse a feature of the target feature point into a matched feature point, thereby increasing a recognition degree of the feature point, so that a corresponding depth map can be more accurately obtained based on a feature map obtained through feature fusion, and ranging accuracy is improved.

In another possible implementation, the computer device may input the first image and the second image into a target network, to obtain the first depth map and the second depth map.

As shown in FIG. 5, in a possible implementation, the target network may include a first subnet, and the first subnet is configured to output a feature map of an input image based on the image.

For example, as shown in FIG. 6, a first image that is shot by the fisheye camera and whose size is HxW may be input into the first subnet to obtain a first feature map that represents a first image feature and whose size is H1xW1, and a second image that is shot by the pinhole camera and whose size is H'xW' may be input into the first subnet to obtain a second feature map that represents a second image feature and whose size is H2xW2.

In a possible implementation, features of images captured by different cameras may be extracted by using a same first subnet, to obtain feature maps corresponding to the images.

For example, features of images captured by the pinhole camera and the fisheye camera are extracted by using a resent50 feature extraction network, to obtain feature maps corresponding to the images.

In another possible implementation, features of different images may be extracted by using different feature extraction networks, to obtain feature maps corresponding to the images.

For example, a feature of an image captured by the pinhole camera is extracted by using a resent50 feature extraction network, to obtain a feature map corresponding to the image, and a feature of an image captured by the fisheye camera is extracted by using a resent50 feature extraction network with deformable convolution (deformable convolution), to obtain a feature map corresponding to the image.

In a possible implementation, size alignment may be performed on the first feature map and the second feature map.

For example, the first feature map is a feature map of the first image captured by the fisheye camera, and the second feature map is a feature map of the second image captured by the pinhole camera. A focal length of the fisheye camera is N, and a focal length of the pinhole camera is 4N, that is, the focal length of the pinhole camera is four times the focal length of the fisheye camera. In this case, the first feature map may be enlarged by four times, so that sizes of the first feature map and the second feature map are aligned.

As shown in FIG. 5, in a possible implementation, the target network may include a second subnet, and the second subnet is configured to output a corresponding fused feature map based on an input feature map.

For example, the second subnet may obtain the third feature map (that is, a fused feature map of the first feature map) based on the first feature point in the first feature map and the plurality of target feature points corresponding to the first feature point; and obtain the fourth feature map (that is, a fused feature map of the second feature map) based on the second feature point in the second feature map and the plurality of target feature points corresponding to the second feature point.

It should be noted that an example in which the computer device obtains the first image shot by the fisheye camera and the second image shot by the pinhole camera is used. The first feature map corresponding to the first image is flattened into a one-dimensional feature represented as [a0, a1, ..., aH1xW1] with a length of H1xW1, and the second feature map corresponding to the second image is flattened into a one-dimensional feature represented as [b0, b1, ..., bH2xW2] with a length of H2xW2. Further, the two features are spliced into a one-dimensional feature C=[a0, a1, ..., aH1xW1, b0, b1, ..., bH2xW2]. Then, a network is used to map the one-dimensional feature C into three features: Q, K, and V. It is assumed that for a feature bi whose index position is i in the second feature map, after calculation based on an epipolar constraint, the feature bi has n feature index positions in a corresponding depth range (dmin, dmax) in the first feature map, which are respectively {ad0, ad1, ..., adn}. Therefore, an element qii corresponding to a pinhole image feature index position i in Q does not need to be dot-multiplied by all elements in K whose length is H1xW1+H2xW2, but only needs to be dot-multiplied by n elements corresponding to {ad0, ad1, ..., adn} one by one to obtain products of qii and the n elements. Then, S=[s1, s2, ..., sn] is obtained through a softmax operation. Finally, a weighted summation operation is performed with n elements corresponding to {ad0, ad1, ..., adn} in V, to obtain a fused feature bi' corresponding to bi. The foregoing operations are performed on each feature point to obtain a one-dimensional feature C', and then the one-dimensional feature C' is split and converted into the third feature map corresponding to the first feature map and the fourth feature map corresponding to the second feature map based on a splicing order of C.

Optionally, the target feature point may alternatively be the feature point that conforms to the epipolar constraint in the image having the common view area with the image corresponding to the feature point and a feature point around the feature point that conforms to the epipolar constraint.

It should be noted that, performing expansion processing in a specific range on a position of the target feature point can improve robustness of a slight change of a camera extrinsic parameter. An example in which the computer device obtains the first image shot by the fisheye camera and the second image shot by the pinhole camera is used. The first feature map corresponding to the first image is flattened into a one-dimensional feature represented as [a0, a1, ..., aH1xW1] with a length of H1xW1, and the second feature map corresponding to the second image is flattened into a one-dimensional feature represented as [b0, b1, ..., bH2xW2] with a length of H2xW2. Further, the two features are spliced into a one-dimensional feature C=[a0, a1, ..., aH1xW1, b0, b1, ..., bH2xW2]. Then, a network is used to map the one-dimensional feature C into three features: Q, K, and V It is assumed that for a feature bi whose index position is i in the second feature map, after calculation based on an epipolar constraint, the feature bi has n feature index positions in a corresponding depth range (dmin, dmax) in the first feature map, which are respectively {ad0, ad1, ..., adn}. After expansion processing, there are m candidate points. An overall representation is {ad0, ad1, ..., adn, adn+1, ..., adn+m}. Therefore, an element qii corresponding to a pinhole image feature index position i in Q does not need to be dot-multiplied by all elements in K whose length is H1xW1+H2xW2, but only needs to be dot-multiplied by n+m elements corresponding to {ad0, ad1, ..., adn, adn+1, ..., adn+m} one by one to obtain products of qii and the n+m elements. Then, S=[s1, s2, ..., sn+m] is obtained through a softmax operation. Finally, a weighted summation operation is performed with n+m elements corresponding to {ad0, ad1, ..., adn, adn+1, ..., adn+m} in V, to obtain a fused feature bi' corresponding to bi.

As shown in FIG. 5, in a possible implementation, the target network may include a third subnet, and the third subnet is configured to output a corresponding depth map based on an input feature map or a fused feature map.

For example, the third feature map and the fourth feature map may be input into the third subnet of the target network, to obtain the first depth map and the second depth map.

For another example, the first feature map and the second feature map may be input into the third subnet of the target network, to obtain the first depth map and the second depth map.

The third subnet is obtained through training by using a first training data sample set, and the first training data sample set includes a plurality of images and depth maps corresponding to the plurality of images.

For example, synchronization frame data of a point cloud and an image may be obtained by using a truth vehicle with 360-degree laser scanning. Then, a depth map corresponding to the image is obtained by using the point cloud, supervised training is performed on the third subnet by using the image and the depth map corresponding to the image, and assisted training may be performed on the third subnet by using self-supervised training and temporal inter-frame consistency.

S303: The computer device determines a distance between an object in the first image and the vehicle and/or a distance between an object in the second image and the vehicle based on the first depth map and the second depth map.

For example, three-dimensional coordinates of pixels in the first image in a first camera coordinate system may be obtained based on the first depth map (or a third depth map), three-dimensional coordinates of pixels in the second image in a second camera coordinate system may be obtained based on the second depth map (or a fourth depth map), then the three-dimensional coordinates of the pixels in the first camera coordinate system and the three-dimensional coordinates of the pixels in the second camera coordinate system are converted into coordinates of the pixels in a vehicle coordinate system, and then the distance between the object in the first image and the vehicle and/or the distance between the object in the second image and the vehicle are/is determined by using the three-dimensional coordinates of the pixels in the vehicle coordinate system. The first camera coordinate system is a coordinate system established by using an optical center of the first camera as a coordinate origin, the second coordinate system is a coordinate system established by using an optical center of the second camera as a coordinate origin, and the vehicle coordinate system is a coordinate system established by using a vehicle body reference point (for example, a rear axis center of the vehicle) as a coordinate origin.

It should be noted that some objects (for example, a floating obstacle) may not be located in the common view area of the first camera and the second camera, but exist independently in a field of view of the first camera or the second camera, that is, exist independently in the first image or the second image. Distances between these objects and the vehicle may be determined by using the first depth map and the second depth map.

In a possible implementation, the distance between the object in the first image and the vehicle and/or the distance between the object in the second image and the vehicle may be determined based on the first depth map (or the third depth map), the second depth map (or the fourth depth map), first structural semantics, and second structural semantics.

For example, three-dimensional coordinates of pixels in the first image in a first camera coordinate system may be obtained based on the first depth map (or the third depth map), three-dimensional coordinates of pixels in the second image in a second camera coordinate system may be obtained based on the second depth map (or the fourth depth map), then the three-dimensional coordinates of the pixels in the first camera coordinate system and the three-dimensional coordinates of the pixels in the second camera coordinate system are converted into coordinates of the pixels in a vehicle coordinate system, pixels corresponding to an edge point of a target object are subsequently aligned based on the first structural semantics and the second structural semantics, and then the distance between the object in the first image and the vehicle and/or the distance between the object in the second image and the vehicle are/is determined by using the three-dimensional coordinates of the pixels in the vehicle coordinate system. The target object is an object that exists in both the first image and the second image.

It may be understood that a point in actual space may be observed in a plurality of cameras. For example, an object edge point in given space may appear in both the first image shot by the fisheye camera and the second image shot by the pinhole camera. However, because a depth map corresponding to an image corresponds to each camera, pixel coordinates provided by the fisheye camera and pixel coordinates provided by the pinhole camera may still have a deviation in a unified coordinate system. Therefore, structural semantics is used in the ranging method provided in this embodiment of this application, and the pixels corresponding to the edge point of the target object are aligned based on the first structural semantics and the second structural semantics, so that the foregoing deviation can be reduced.

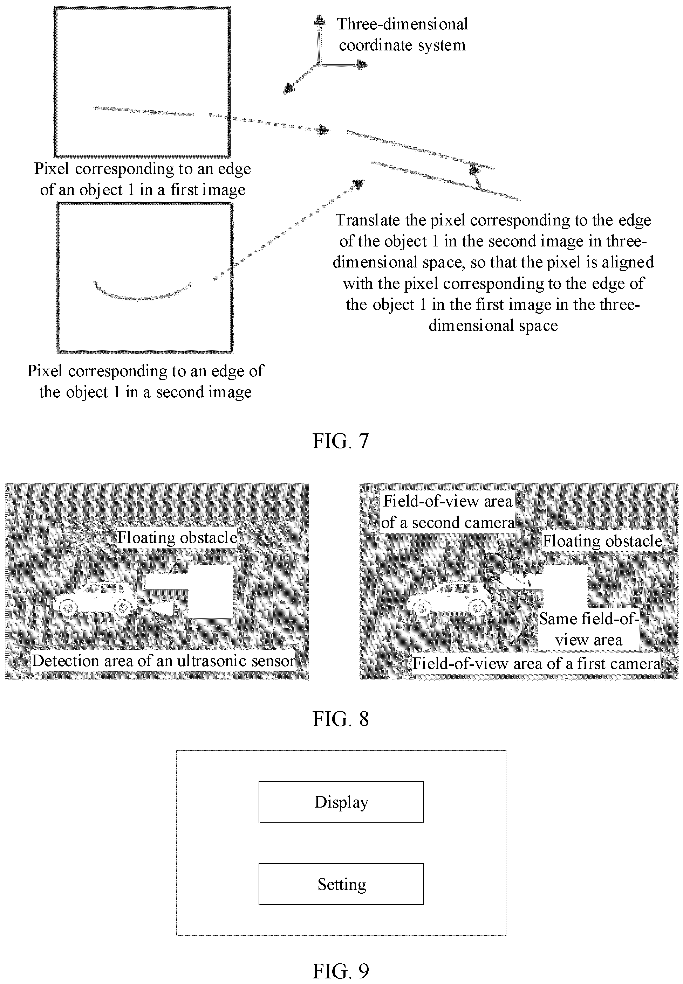

For example, as shown in FIG. 7, a first image and a second image in FIG. 7 show an edge of an object 1. An example in which pixels corresponding to the edge of the object 1 are aligned is used. A pixel corresponding to the edge of the object 1 in the first image shot by the fisheye camera is converted into a string of points [q1, q2, ..., qm] in the vehicle coordinate system, and a pixel corresponding to the edge of the object 1 in the second image shot by the pinhole camera is converted into another string of points [p1, p2, ..., pn] in the vehicle coordinate system. After a rotation and translation RT operation is performed on the pixel corresponding to the edge of the object 1 in the first image, the pixel may be aligned with the pixel corresponding to the edge of the object 1 in the second image, that is, a sum of Euclidean geometric distances between every two most adjacent points is minimum. An RT matrix may be obtained through calculation by using a gradient solving algorithm, to align the edges of the object 1 in the first image and/or the second image. Similarly, same optimization may also be performed on pixels of another same object in the first image and/or the second image.

In a possible implementation, the distance between the object in the first image and the vehicle and/or the distance between the object in the second image and the vehicle may be determined based on the first depth map (or the third depth map), the second depth map (or the fourth depth map), a first instance segmentation result, a second instance segmentation result, first distance information, and second distance information.

The first instance segmentation result indicates a background and a movable object in the first image, the second instance segmentation result indicates a background and a movable object in the second image, the first distance information indicates a distance between an object in a third image and the vehicle, the third image is an image captured by the first camera at a second moment, the second distance information indicates a distance between an object in a fourth image and the vehicle, and the fourth image is an image captured by the second camera at the second moment.

For example, three-dimensional coordinates of pixels in the first image in a first camera coordinate system may be obtained based on the first depth map (or a third depth map), three-dimensional coordinates of pixels in the second image in a second camera coordinate system may be obtained based on the second depth map (or a fourth depth map), then the three-dimensional coordinates of the pixels in the first camera coordinate system and the three-dimensional coordinates of the pixels in the second camera coordinate system are converted into coordinates of the pixels in a vehicle coordinate system, and then the distance between the object in the first image and the vehicle and/or the distance between the object in the second image and the vehicle are/is determined by using the three-dimensional coordinates of the pixels in the vehicle coordinate system. Then, the obtained distance between the object in the first image and the vehicle and/or the obtained distance between the object in the second image and the vehicle are/is corrected by using the first instance segmentation result, the second instance segmentation result, the first distance information, and the second distance information.

It may be understood that a position of a background is fixed, and based on a position relationship of the vehicle between two moments and a distance between the vehicle and the background at one of the two moments, a distance between the vehicle and the background at the other of the two moments is determined. For example, if the vehicle is 5 meters away from a wall at a moment 1, and the vehicle travels 0.5 meters away from the wall between the moment 1 and a moment 2, it may be determined that the vehicle is 5+0.5=5.5 meters away from the wall at the moment 2. Therefore, the obtained distance between the object in the first image and the vehicle and/or the obtained distance between the object in the second image and the vehicle are/is corrected by using this relationship, the first instance segmentation result, the second instance segmentation result, the first distance information, and the second distance information.

The background and the movable object in the first image may be segmented based on the first instance segmentation result, and a converted distance between the background and the vehicle in the first image shot at the first moment is obtained through conversion by using a position relationship of the vehicle between the first moment and the second moment and a distance between the background and the vehicle in the third image shot at the second moment. Then, the distance (a measured distance) between the object (the background) in the first image and the vehicle is corrected by using the converted distance obtained through conversion (for example, converted distance*0.2+measured distance*0.8=corrected distance).

For example, both the first image and the third image include a wall 1, a distance between the vehicle and the wall 1 in the third image is 0.5 meters, and the vehicle travels 0.2 meters toward the wall from the second moment to the first moment. In this case, it may be determined through conversion that a converted distance between the vehicle and the wall at the first moment is 0.5-0.2=0.3 meters. If a measured distance between the vehicle and the wall that is obtained through measurement by using the depth map of the first image is 0.28 meters, the measured distance may be corrected by using the converted distance, that is, it is determined that the corrected distance is 0.3*0.2+0.28*0.8=0.284 meters, to further improve ranging accuracy.

The background and the movable object in the second image may be segmented based on the second instance segmentation result, and a converted distance between the background and the vehicle in the second image shot at the first moment is obtained through conversion by using the position relationship of the vehicle between the first moment and the second moment and a distance between the background and the vehicle in the fourth image shot at the second moment. Then, the distance (a measured distance) between the object (the background) in the second image and the vehicle is corrected by using the converted distance obtained through conversion (for example, converted distance*0.2+measured distance*0.8=corrected distance).

It can be learned that, according to the ranging method provided in this embodiment of this application, the first image captured by the camera whose field of view is greater than a preset angle and the second image captured by the camera having the common view area with the camera are input into the target network to obtain the first depth map and the second depth map corresponding to the images, and then the distance between the object in the first image and the vehicle and the distance between the object in the second image and the vehicle are determined based on the first depth map and the second depth map. The camera whose field of view range is greater than the preset angle can compensate for an inherent blind area of a ranging sensor layout, so that the vehicle can perform ranging on an obstacle in the detection blind area.

As shown in FIG. 8, in a related technology, an ultrasonic sensor is used to perform ranging. Because there is a blind area in a sensor layout, in a vehicle reversing process, the ultrasonic sensor cannot find a floating obstacle behind the vehicle and give a user a prompt. Therefore, an accident is likely to occur. According to the ranging method provided in this embodiment of this application, ranging is performed jointly by using the images captured by the first camera (for example, a fisheye camera) and the second camera (for example, a pinhole camera) that have the common view area, so that the inherent blind area of the ranging sensor layout can be compensated. In this way, the vehicle can detect the floating obstacle in the detection blind area of the ultrasonic sensor and give the user a prompt, so that the user can discover the floating obstacle behind the vehicle in a timely manner, thereby reducing a probability of collision between the vehicle and the floating obstacle.

Optionally, the ranging method provided in this embodiment of this application may further include the following steps.

S304: Obtain the first structural semantics and the second structural semantics.

As shown in FIG. 5, in a possible implementation, the target network may include a fourth subnet, and the fourth subnet is configured to output corresponding structural semantics based on an input image or a feature map. The structural semantics indicates an object edge and a plane in the image.

For example, the first image, the first feature map, or the third feature map may be input into the fourth subnet of the target network, to obtain the first structural semantics. The second image, the second feature map, or the fourth feature map is input into the fourth subnet of the target network, to obtain the second structural semantics. The first structural semantics indicates an object edge and a plane in the first image, and the second structure indicates an object edge and a plane in the second image.

Optionally, an object edge of an object may be represented by a thermodynamic diagram of the edge, and a planar structure of the object may be represented by a three-dimensional normal vector diagram.

For example, instance segmentation and labeling may be performed on a plurality of images to obtain object edges in the plurality of images, then a plane normal vector of each area of the images is calculated with reference to geometric information of a point cloud and instance segmentation and labeling semantic information, to obtain planar structures of objects in the plurality of images, and subsequently supervised training is performed on the second subnet by using the object edges in the plurality of images and the planar structures of the objects in the plurality of images.

S305: Obtain the first instance segmentation result and the second instance segmentation result.

As shown in FIG. 5, in a possible implementation, the target network may include a fifth subnet, and the fifth subnet is configured to output corresponding structural semantics based on an input image or a feature map. An object attribute includes an instance segmentation result of an image. Instance segmentation of the image indicates a background and a movable object in the image. For example, the instance segmentation of the image indicates a movable object such as a vehicle or a pedestrian in the image and a background such as a ground or a wall in the image.

For example, the first image, the first feature map, or the third feature map may be input into the fifth subnet of the target network, to obtain the first instance segmentation result. The second image, the second feature map, or the fourth feature map is input into the fifth subnet of the target network, to obtain the second instance segmentation result. The first instance segmentation result indicates an instance segmentation result of the first image, and the second instance segmentation result indicates an instance segmentation result of the second image.

In a possible implementation, instance segmentation and labeling may be performed on a plurality of images to obtain instance segmentation structures of the plurality of images, and then the fifth subnet is trained by using the plurality of images and the instance segmentation structures of the plurality of images.

S306: The computer device performs three-dimensional reconstruction on the object in the first image and the object in the second image based on the distance between the object in the first image and the vehicle and the distance between the object in the second image and the vehicle.

In a possible implementation, the computer device performs three-dimensional reconstruction on the object in the first image and the object in the second image based on the distance between the object in the first image and the vehicle, the distance between the object in the second image and the vehicle, and color information. The color information indicates a color of each pixel in the first image and the second image.

S307: The computer device displays three-dimensional reconstructed objects.

For example, a terminal may display, by using a display panel, the three-dimensional reconstructed objects.

For another example, a server may send a display instruction to a terminal, and after receiving the display instruction, the terminal displays, according to the display instruction, the three-dimensional reconstructed objects.

S308: The computer device displays prompt information based on the distance between the object in the first image and the vehicle and the distance between the object in the second image and the vehicle.

For example, when the distance between the object in the first image and the vehicle is less than a distance threshold, collision alarm prompt information is displayed to remind the user that the vehicle may collide with the object in the first image.

For another example, when the distance between the object in the second image and the vehicle is less than a distance threshold, distance prompt information is displayed to remind the user that the vehicle is relatively close to the object in the second image.

The prompt information may be text information, sound information, or image information.

It may be understood that, the prompt information is displayed based on the distance between the object in the first image and the vehicle and the distance between the object in the second image and the vehicle, so that the user can be reminded when the object in the image is relatively close to the vehicle, and the user can perform timely processing, thereby avoiding collision between the vehicle and the object in the image.

In a possible implementation, the distance between the object in the first image and the vehicle and/or the distance between the object in the second image and the vehicle are/is a distance between the object in the first image and an equidistant contour of the vehicle and/or a distance between the object in the second image and the equidistant contour of the vehicle. The equidistant contour of the vehicle is an equidistant contour that is set based on an outer contour of the vehicle. The equidistant contour may be a two-dimensional (2D) equidistant line extending outward from an outer contour line of the vehicle body in a top view, or may be a three-dimensional (3D) equidistant curved surface extending outward from a three-dimensional outer contour of the vehicle body.

In a possible implementation, the equidistant contour of the vehicle may be adjusted based on the distance between the object in the first image and the vehicle and the distance between the object in the second image and the vehicle.

For example, when the distance between the object in the image and the vehicle is less than or equal to 0.5 m, a color of the equidistant contour is adjusted to yellow.

For another example, when the distance between the object in the image and the vehicle is less than or equal to 0.2 m, a color of the equidistant contour is adjusted to red.

In a possible implementation, the method may further include: displaying a first interface. As shown in FIG. 9, the first interface may include a display function control and a setting function control. A display function is used to display an object around the vehicle.

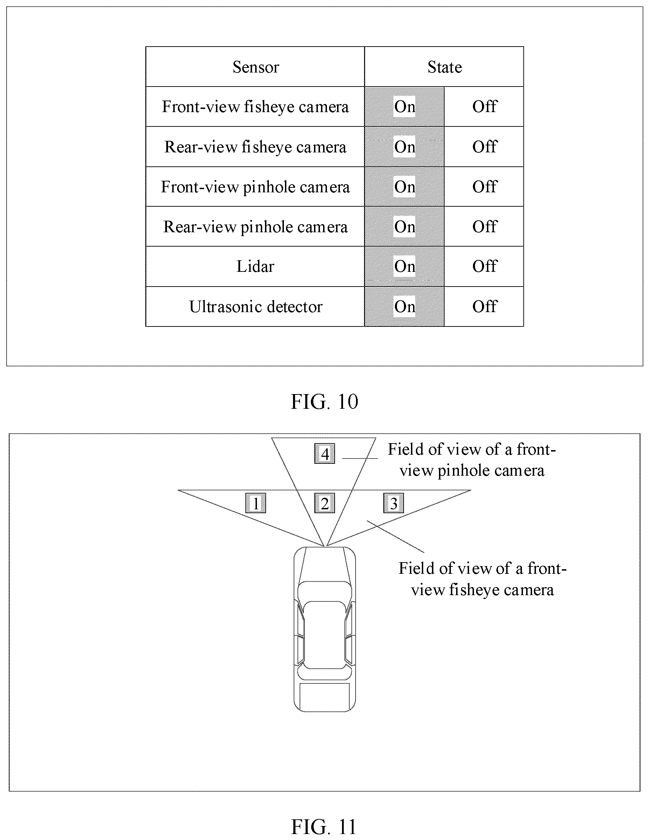

As shown in FIG. 10, the user may tap the display function control to display a second interface, and may select, by using the second interface, a sensor to be used in a running process of the display function. It can be learned from FIG. 10 that the user chooses to turn on a front-view fisheye camera, a rear-view fisheye camera, a front-view pinhole camera, a rear-view pinhole camera, a lidar, and an ultrasonic detector.

As shown in FIG. 11, in a scenario, there are a plurality of objects in front of the vehicle. An object 1, an object 2, and an object 3 are located within a field of view of the front-view fisheye camera, and the object 2 and an object 4 are located within a field of view of the front-view pinhole camera. The object 2 is located within a common field of view of the front-view fisheye camera and the front-view pinhole camera.

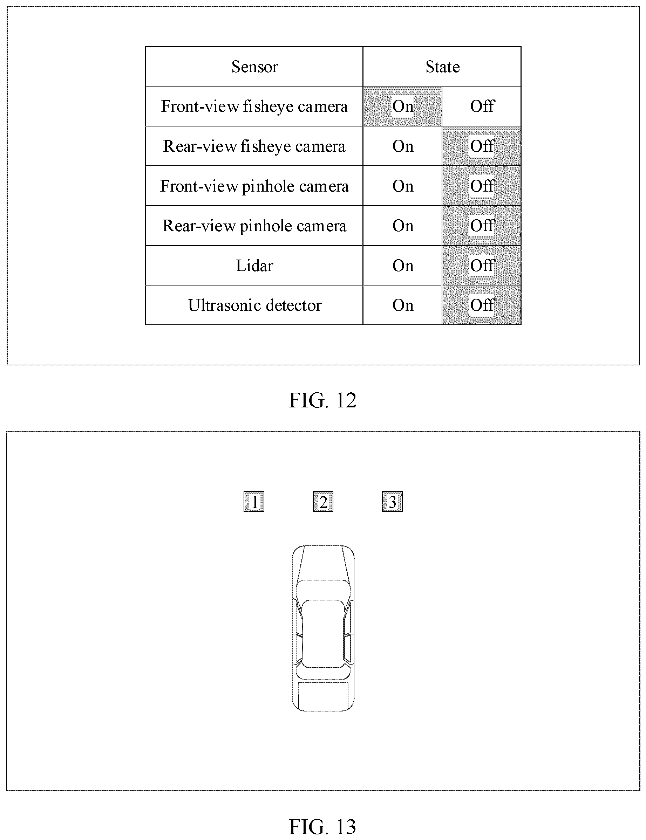

As shown in FIG. 12, the user chooses, in the second interface, to turn on only a front-view fisheye camera and turn off a front-view pinhole camera, then returns to the first interface, and taps the display function control. Subsequently, a third interface shown in FIG. 13 is displayed. It can be learned from the third interface shown in FIG. 13 that an object 1, an object 2, and an object 3 exist in front of the vehicle. Because the front-view pinhole camera is turned off, compared with the actual scenario shown in FIG. 11, the third interface shown in FIG. 13 lacks an object 4 in a field of view of the front-view pinhole camera. Therefore, a detection blind area exists when object detection is performed by using only the front-view fisheye camera, and the object 4 in front of the vehicle cannot be found.

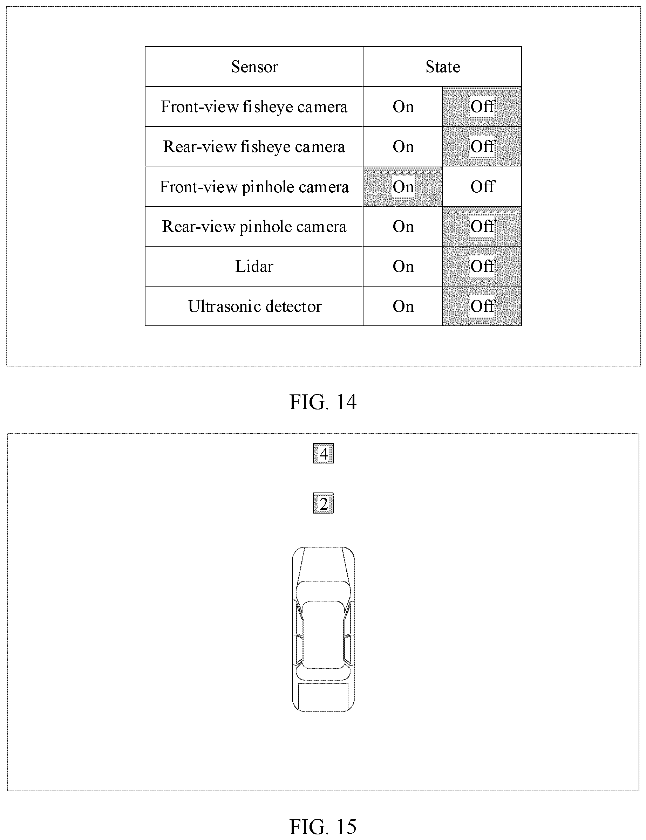

As shown in FIG. 14, the user chooses, in the second interface, to turn on only a front-view pinhole camera and turn off a front-view fisheye camera, then returns to the first interface, and taps the display function control. Subsequently, a third interface shown in FIG. 15 is displayed. It can be learned from the third interface shown in FIG. 15 that an object 2 and an object 4 exist in front of the vehicle. Because the front-view fisheye camera is turned off, compared with the actual scenario shown in FIG. 11, the third interface shown in FIG. 15 lacks an object 4 in a field of view of the front-view fisheye camera. Therefore, a detection blind area exists when object detection is performed by using only the front-view pinhole camera, and the object 1 and the object 3 in front of the vehicle cannot be found.

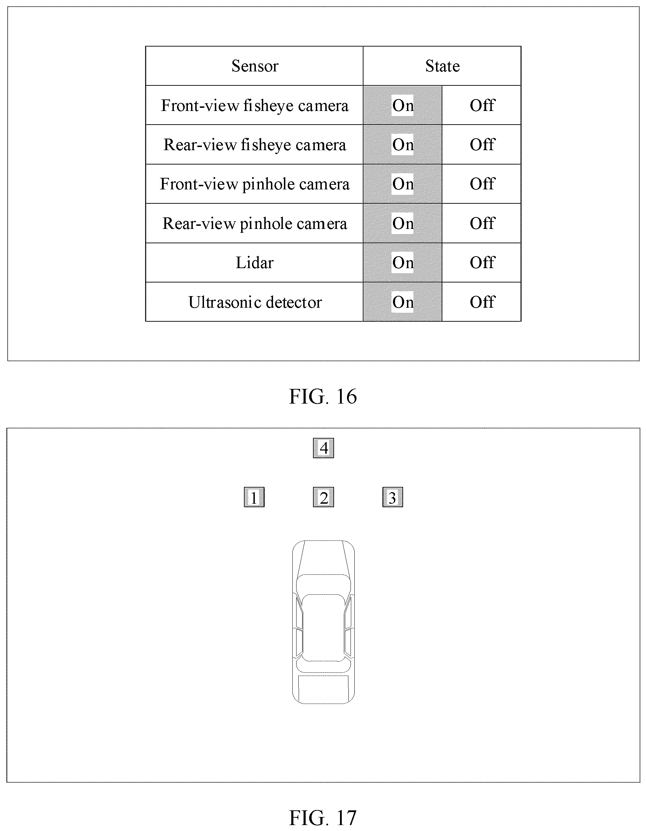

As shown in FIG. 16, the user chooses, in the second interface, to turn on only a front-view pinhole camera and a front-view fisheye camera, then returns to the first interface, and taps the display function control. Subsequently, a third interface shown in FIG. 17 is displayed. It can be learned from the third interface shown in FIG. 17 that an object 1, an object 2, an object 3, and an object 4 exist in front of the vehicle, and this is consistent with the actual scenario shown in FIG. 11.

It can be learned that, in comparison with ranging performed by using a single sensor, in this embodiment of this application, a plurality of sensors may be selected to perform ranging together, to compensate for an inherent blind area of a single sensor layout, so that the vehicle performs ranging on an obstacle in the detection blind area of the single sensor.

In a possible implementation, the third interface may further display prompt information. For example, when the distance between the vehicle and the object is less than 0.5 meters, the third interface displays the prompt information.

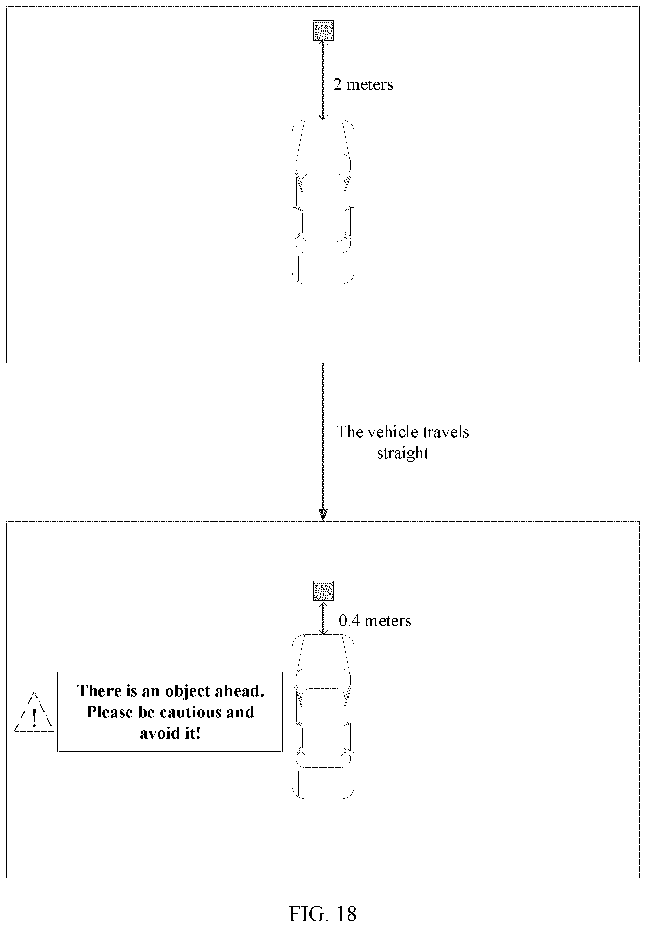

As shown in FIG. 18, initially, an object exists 2 meters in front of the vehicle. After the vehicle travels straight for a period of time, the distance between the vehicle and the front object is shortened to 0.4 meters. In this case, a text box is displayed in the third interface to prompt the user that the object is relatively close.

It can be learned that, in this embodiment of this application, the user may be prompted when the object is relatively close to the vehicle, so that the user can perform timely processing, thereby avoiding collision between the vehicle and the object.

In a possible implementation, the ranging method provided in embodiments of this application may be integrated into a public cloud and released externally as a service. When the ranging method is integrated into the public cloud and released externally as a service, data uploaded by a user may be further protected. For example, for images, an image uploaded by the user may be required to be encrypted in advance.

In another possible implementation, the ranging method provided in embodiments of this application may alternatively be integrated into a private cloud and used internally as a service. When the ranging method is integrated into the private cloud, whether to protect data uploaded by a user may be determined according to an actual requirement.

In still another possible implementation, the ranging method provided in embodiments of this application may alternatively be integrated into a hybrid cloud. The hybrid cloud means an architecture including one or more public clouds and one or more private clouds.

When the ranging method provided in embodiments of this application is provided for use by a user in a manner of a service, the service may provide an application programming interface (application programming interface, API) and/or a user interface (which is also referred to as a user interface). The user interface may be a graphical user interface (graphical user interface) or a command user interface (command user interface, CUI). In this way, a service system such as an operating system or a software system may directly invoke the API provided by the service to perform ranging, or the service receives, through the GUI or the CUI, an image that is input by a user, and performs ranging based on the image.

In still another possible implementation, the ranging method provided in embodiments of this application may be encapsulated into a software package for sale. After purchasing the software package, a user may install and use the software package in a running environment of the user. Certainly, the foregoing software package may alternatively be pre-installed in various devices (for example, a desktop computer, a notebook computer, a tablet computer, and a smartphone). A user purchases a device on which the software package is pre-installed, and uses the device to perform ranging based on an image.

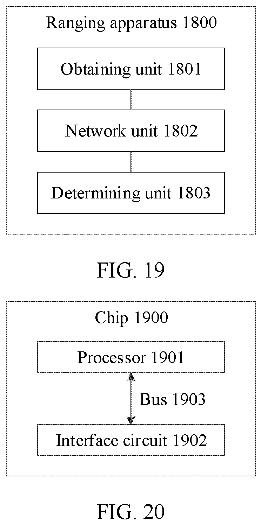

A ranging apparatus configured to perform the foregoing ranging method is described below with reference to FIG. 19.

It may be understood that, to implement the foregoing functions, the ranging apparatus includes a corresponding hardware module and/or software module for performing the functions. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, a ranging apparatus may be divided into functional modules based on the foregoing method examples. For example, each functional module may be obtained through division based on each corresponding function, or two or more functions may be integrated into one processing module. The integrated module may be implemented in a form of hardware. It should be noted that division into the modules in the embodiments is an example, and is merely logical function division. In actual implementation, there may be another division manner.

When each functional module is obtained through division based on each corresponding function, FIG. 19 is a possible composition diagram of the ranging apparatus in the foregoing embodiments. As shown in FIG. 19, the ranging apparatus 1800 may include an obtaining unit 1801, a network unit 1802, and a determining unit 1803.

The obtaining unit 1801 is configured to obtain a first image and a second image, where the first image is an image captured by a first camera, the second image is an image captured by a second camera, the first camera and the second camera have a common view area, the first camera is a fisheye camera, and the second camera is a pinhole camera.

The network unit 1802 is configured to obtain a first depth map and a second depth map, where the first depth map is a depth map corresponding to the first image, and the second depth map is a depth map corresponding to the second image.

The determining unit 1803 is configured to determine a distance between an object in the first image and a vehicle and/or a distance between an object in the second image and the vehicle based on the first depth map and the second depth map.

In a possible implementation, the network unit is specifically configured to: perform feature extraction on the first image and the second image to obtain a first feature map and a second feature map, where the first feature map is a feature map corresponding to the first image, and the second feature map is a feature map corresponding to the second image; perform feature matching on each feature point in the first feature map based on a target feature point of each feature point in the first feature map, to obtain a third feature map, where the target feature point is a feature point that conforms to an epipolar constraint in an image having a common view area with an image corresponding to the feature point; perform feature matching on each feature point in the second feature map based on a target feature point of each feature point in the second feature map, to obtain a fourth feature map; and input the third feature map and the fourth feature map into a target network, to obtain the first depth map and the second depth map.

In a possible implementation, the network unit is specifically configured to: input the third feature map into the target network, to obtain the first depth map and first structural semantics, where the first structural semantics indicates an object edge and a plane in the first image; and input the fourth feature map into the target network, to obtain the second depth map and second structural semantics, where the second structural semantics indicates an object edge and a plane in the second image.

In a possible implementation, the determining unit is specifically configured to determine the distance between the object in the first image and the vehicle and the distance between the object in the second image and the vehicle based on the first depth map, the second depth map, the first structural semantics, and the second structural semantics.

In a possible implementation, the network unit is specifically configured to: input the third feature map into the target network, to obtain the first depth map and a first instance segmentation result, where the first instance segmentation result indicates a background and a movable object in the first image; and input the fourth feature map into the target network, to obtain the second depth map and a second instance segmentation result, where the second instance segmentation result indicates a background and a movable object in the second image.

Optionally, the first image is an image captured by the first camera at a first moment, and the second image is an image captured by the second camera at the first moment.

In a possible implementation, the determining unit is specifically configured to determine the distance between the object in the first image and the vehicle and the distance between the object in the second image and the vehicle based on the first depth map, the second depth map, the first instance segmentation result, the second instance segmentation result, first distance information, and second distance information, where the first distance information indicates a distance between an object in a third image and the vehicle, the third image is an image captured by the first camera at a second moment, the second distance information indicates a distance between an object in a fourth image and the vehicle, and the fourth image is an image captured by the second camera at the second moment.

In a possible implementation, the obtaining unit is further configured to calibrate the first image based on an intrinsic parameter of the first camera and a preset camera intrinsic parameter.

In a possible implementation, the second image is an image captured by the second camera, and the obtaining unit is further configured to calibrate the second image based on an intrinsic parameter of the second camera and a preset camera intrinsic parameter.

In a possible implementation, the determining unit is further configured to: perform three-dimensional reconstruction on the object in the first image and the object in the second image based on the distance between the object in the first image and the vehicle and the distance between the object in the second image and the vehicle; and display three-dimensional reconstructed objects.

In a possible implementation, the determining unit is further configured to display prompt information based on the distance between the object in the first image and the vehicle and the distance between the object in the second image and the vehicle.

In a possible implementation, the first camera is a fisheye camera, and the second camera is a pinhole camera.

An embodiment of this application further provides a chip. The chip may be a system on chip (System on Chip, SOC) or another chip.

FIG. 20 is a diagram of a structure of a chip 1900. The chip 1900 includes one or more processors 1901 and an interface circuit 1902. Optionally, the chip 1900 may further include a bus 1903.

The processor 1901 may be an integrated circuit chip and has a signal processing capability. In an implementation process, steps of the foregoing ranging method may be completed by using an integrated logic circuit of hardware in the processor 1901 or instructions in a form of software.

Optionally, the foregoing processor 1901 may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 1902 may be configured to send or receive data, instructions, or information. The processor 1901 may perform processing by using the data, the instructions, or other information received by the interface circuit 1902, and may send processed information by using the interface circuit 1902.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking the operation instructions stored in the memory (the operation instructions may be stored in an operating system).

Optionally, the chip may be used in the ranging apparatus in embodiments of this application. Optionally, the interface circuit 1902 may be configured to output an execution result of the processor 1901. For the ranging method provided in one or more of embodiments of this application, refer to the foregoing embodiments. Details are not described herein again.

It should be noted that functions corresponding to the processor 1901 and the interface circuit 1902 may be implemented by using a hardware design, may be implemented by using a software design, or may be implemented by using a combination of software and hardware. This is not limited herein.

FIG. 13 is a diagram of a structure of an electronic device according to an embodiment of this application. The electronic device 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a model processing apparatus, or a chip or a functional module in a model processing apparatus.

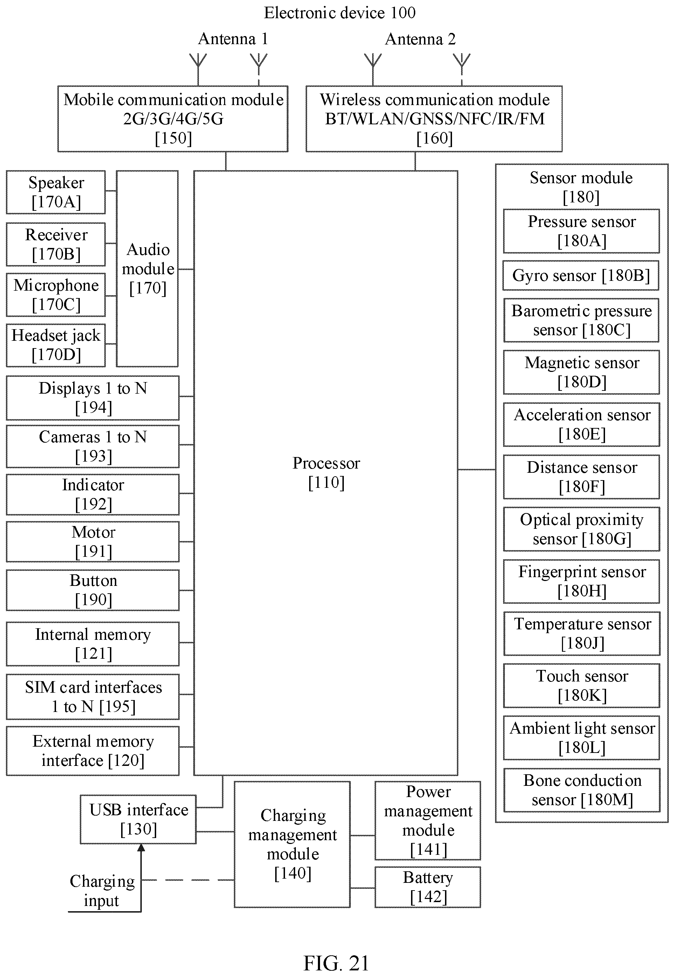

For example, FIG. 21 is a diagram of a structure of an example electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus. The processor 110 may be coupled to the touch sensor 180K by using the I2C interface, so that the processor 110 communicates with the touch sensor 180K by using the I2C bus interface, to implement a touch function of the electronic device 100. The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 communicates with the display 194 by using the DSI interface, to implement a display function of the electronic device 100.

It may be understood that the interface connection relationship between the modules shown in this embodiment of this application is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like.

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the touch sensor, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an instance is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into an image signal in a standard format such as RGB or YUV It should be understood that, in descriptions of embodiments of this application, an image in the RGB format is used as an example for description, and an image format is not limited in embodiments of this application. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The external memory interface 120 may be configured to connect to an external memory card, such as a micro SD card, to extend a storage capability of the electronic device 100. The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area.

The electronic device 100 may implement an audio function, such as music playing and recording, by using the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device 100 may receive button input, and generate button signal input related to user settings and function control of the electronic device 100. The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. The indicator 192 may be an indicator light, and may indicate a charging status or a power change, or may indicate a message, a missed call, a notification, or the like. The SIM card interface 195 is configured to connect to a SIM card.

It should be noted that the electronic device 100 may be a chip system or a device having a structure similar to that in FIG. 21. The chip system may include a chip, or may include a chip and another discrete device. For actions, terms, and the like in embodiments of this application, refer to each other. This is not limited. In embodiments of this application, a name of a message exchanged between devices, a name of a parameter in a message, or the like is merely an example. Another name may alternatively be used during specific implementation. This is not limited. In addition, the composition structure shown in FIG. 21 does not constitute a limitation on the electronic device 100. In addition to the components shown in FIG. 21, the electronic device 100 may include more or fewer components than those shown in FIG. 21, or combine some components, or have different component arrangements.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

An embodiment of this application further provides a ranging apparatus. The apparatus includes one or more processors. When the one or more processors execute program code or instructions, the foregoing related method steps are implemented to implement the ranging method in the foregoing embodiments.

Optionally, the apparatus may further include one or more memories, and the one or more memories are configured to store the program code or the instructions.

An embodiment of this application further provides a vehicle. The vehicle includes one or more fisheye cameras, one or more pinhole cameras, and one or more processors. The processors may be used for the ranging method in the foregoing embodiments. Optionally, the one or more processors may be implemented in a form of the foregoing ranging apparatus. Optionally, the vehicle further includes a display, configured to display information such as a road condition, distance prompt information, a two-dimensional/three-dimensional model of the vehicle, or a two-dimensional/three-dimensional model of an obstacle. Optionally, the vehicle further includes a speaker, configured to play voice prompt information. The voice prompt information may include information such as a danger prompt and/or a distance between the vehicle and an obstacle. For example, when the distance between the vehicle and the obstacle is less than a preset threshold, a voice is made to prompt a driver to pay attention to existence of the obstacle. The vehicle may remind the driver only by displaying prompt information on the display, or may remind the driver only by using voice prompt information, or may remind the driver by using display information on the display and a voice prompt together. For example, when the distance between the vehicle and the obstacle is less than a first threshold, only prompt information is displayed on the display; or when the distance between the vehicle and the obstacle is less than a second threshold (values of the second threshold and the first threshold are not limited in this application, provided that the second threshold is less than the first threshold, for example, the second threshold is 2 meters, and the first threshold is 1 meter), during display, a voice is made to prompt the driver to pay attention to the obstacle, to draw attention of the driver.

An embodiment of this application further provides a computer storage medium. The computer storage medium stores computer instructions. When the computer instructions are run on a ranging apparatus, the ranging apparatus is enabled to perform the foregoing related method steps to implement the ranging method in the foregoing embodiments.

An embodiment of this application further provides a computer program product. When the computer program product runs on a computer, the computer is enabled to perform the foregoing related steps to implement the ranging method in the foregoing embodiments.

An embodiment of this application further provides a ranging apparatus. The apparatus may be specifically a chip, an integrated circuit, a component, or a module. Specifically, the apparatus may include a memory configured to store instructions and a processor that are connected, or the apparatus includes one or more processors, configured to obtain instructions from an external memory. When the apparatus runs, the processor may execute the instructions, so that a chip performs the ranging method in the foregoing method embodiments.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1.  A ranging method, applied to a vehicle, wherein the vehicle comprises a first camera and a second camera, and the method comprises:

    obtaining a first image and a second image, wherein the first image is an image captured by the first camera, the second image is an image captured by the second camera, the first camera and the second camera have a common view area, the first camera is a fisheye camera, and the second camera is a pinhole camera;
    obtaining a first depth map and a second depth map, wherein the first depth map is a depth map corresponding to the first image, and the second depth map is a depth map corresponding to the second image; and
    determining a distance between an object in the first image and the vehicle and/or a distance between an object in the second image and the vehicle based on the first depth map and the second depth map.

2.  The method according to claim **1,** wherein the obtaining a first depth map and a second depth map comprises:

    obtaining a first feature map and a second feature map, wherein the first feature map is a feature map corresponding to the first image, and the second feature map is a feature map corresponding to the second image;
    obtaining a third feature map based on a first feature point in the first feature map and a plurality of target feature points corresponding to the first feature point, wherein the first feature point is any feature point in the first feature map, and the plurality of target feature points corresponding to the first feature point are feature points that are in the second feature map and that conform to an epipolar constraint with the first feature point;
    obtaining a fourth feature map based on a second feature point in the second feature map and a plurality of target feature points corresponding to the second feature point, wherein the second feature point is any feature point in the second feature map, and the plurality of target feature points corresponding to the second feature point are feature points that are in the first feature map and that conform to an epipolar constraint with the second feature point; and
    obtaining the first depth map and the second depth map based on the third feature map and the fourth feature map.

3.  The method according to claim 1 or 2, wherein the determining a distance between an object in the first image and the vehicle and/or a distance between an object in the second image and the vehicle based on the first depth map and the second depth map comprises:
    determining the distance between the object in the first image and the vehicle and/or the distance between the object in the second image and the vehicle based on the first depth map, the second depth map, first structural semantics, and second structural semantics, wherein the first structural semantics indicates an object edge and a plane in the first image, and the second structural semantics indicates an object edge and a plane in the second image.

4.  The method according to claim 1 or 2, wherein the first image is an image captured by the first camera at a first moment, the second image is an image captured by the second camera at the first moment, and the determining a distance between an object in the first image and the vehicle and/or a distance between an object in the second image and the vehicle based on the first depth map and the second depth map comprises:
    determining the distance between the object in the first image and the vehicle and/or the distance between the object in the second image and the vehicle based on the first depth map, the second depth map, a first instance segmentation result, a second instance segmentation result, first distance information, and second distance information, wherein the first instance segmentation result indicates a background and a movable object in the first image, the second instance segmentation result indicates a background and a movable object in the second image, the first distance information indicates a distance between an object in a third image and the vehicle, the third image is an image captured by the first camera at a second moment, the second distance information indicates a distance between an object in a fourth image and the vehicle, and the fourth image is an image captured by the second camera at the second moment.

5.  The method according to any one of claims 1 to 4, wherein the method further comprises:
    calibrating the first image based on an intrinsic parameter of the first camera and a preset fisheye camera intrinsic parameter.

6.  The method according to any one of claims 1 to 5, wherein the method further comprises:
    calibrating the second image based on an intrinsic parameter of the second camera and a preset pinhole camera intrinsic parameter.

7. The method according to any one of claims 1 to 6, wherein the method further comprises:

    performing three-dimensional reconstruction on the object in the first image and the object in the second image based on the distance between the object in the first image and the vehicle and the distance between the object in the second image and the vehicle; and
    displaying three-dimensional reconstructed objects.

8. The method according to any one of claims 1 to 7, wherein the method further comprises:
    displaying prompt information based on the distance between the object in the first image and the vehicle and the distance between the object in the second image and the vehicle.

9. A ranging apparatus, used in a vehicle that comprises a first camera and a second camera, and comprising an obtaining unit, a network unit, and a determining unit, wherein

    the obtaining unit is configured to obtain a first image and a second image, wherein the first image is an image captured by the first camera, the second image is an image captured by the second camera, the first camera and the second camera have a common view area, the first camera is a fisheye camera, and the second camera is a pinhole camera;
    the network unit is configured to obtain a first depth map and a second depth map, wherein the first depth map is a depth map corresponding to the first image, and the second depth map is a depth map corresponding to the second image; and
    the determining unit is configured to determine a distance between an object in the first image and the vehicle and/or a distance between an object in the second image and the vehicle based on the first depth map and the second depth map.

10. The apparatus according to claim 9, wherein the network unit is specifically configured to:

    obtain a first feature map and a second feature map, wherein the first feature map is a feature map corresponding to the first image, and the second feature map is a feature map corresponding to the second image;
    obtain a third feature map based on a first feature point in the first feature map and a plurality of target feature points corresponding to the first feature point, wherein the first feature point is any feature point in the first feature map, and the plurality of target feature points corresponding to the first feature point are feature points that are in the second feature map and that conform to an epipolar constraint with the first feature point;
    obtain a fourth feature map based on a second feature point in the second feature map and a plurality of target feature points corresponding to the second feature point, wherein the second feature point is any feature point in the second feature map, and the plurality of target feature points corresponding to the second feature point are feature points that are in the first feature map and that conform to an epipolar constraint with the second feature point; and
    obtain the first depth map and the second depth map based on the third feature map and the fourth feature map.

11. The apparatus according to claim 9 or 10, wherein the determining unit is specifically configured to:
    determine the distance between the object in the first image and the vehicle and/or the distance between the object in the second image and the vehicle based on the first depth map, the second depth map, first structural semantics, and second structural semantics, wherein the first structural semantics indicates an object edge and a plane in the first image, and the second structural semantics indicates an object edge and a plane in the second image.

12. The apparatus according to any one of claims 9 to 11, wherein the first image is an image captured by the first camera at a first moment, the second image is an image captured by the second camera at the first moment, and the determining unit is specifically configured to:
    determine the distance between the object in the first image and the vehicle and/or the distance between the object in the second image and the vehicle based on the first depth map, the second depth map, a first instance segmentation result, a second instance segmentation result, first distance information, and second distance information, wherein the first instance segmentation result indicates a background and a movable object in the first image, the second instance segmentation result indicates a background and a movable object in the second image, the first distance information indicates a distance between an object in a third image and the vehicle, the third image is an image captured by the first camera at a second moment, the second distance information indicates a distance between an object in a fourth image and the vehicle, and the fourth image is an image captured by the second camera at the second moment.

13. The apparatus according to any one of claims 9 to 12, wherein the obtaining unit is further configured to: calibrate the first image based on an intrinsic parameter of the first camera and a preset fisheye camera intrinsic parameter.

14. The apparatus according to any one of claims 9 to 13, wherein the obtaining unit is further configured to: calibrate the second image based on an intrinsic parameter of the second camera and a preset pinhole camera intrinsic parameter.

15. The apparatus according to any one of claims 9 to 14, wherein the determining unit is further configured to:

perform three-dimensional reconstruction on the object in the first image and the object in the second image based on the distance between the object in the first image and the vehicle and the distance between the object in the second image and the vehicle; and display three-dimensional reconstructed objects.

16. The apparatus according to any one of claims 9 to 15, wherein the determining unit is further configured to: display prompt information based on the distance between the object in the first image and the vehicle and the distance between the object in the second image and the vehicle.

17. A ranging apparatus, comprising one or more processors and a memory, wherein the one or more processors execute a program or instructions stored in the memory, to enable the ranging apparatus to implement the method according to any one of claims 1 to 8.

18. A vehicle, wherein the vehicle comprises one or more fisheye cameras, one or more pinhole cameras, and one or more processors, and the processors are configured to execute computer instructions to implement the method according to any one of claims 1 to 8.

19. A computer-readable storage medium, configured to store a computer program, wherein when the computer program is run on a computer or a processor, the computer or the processor is enabled to implement the method according to any one of claims 1 to 8.

20. A computer program product, wherein the computer program product comprises instructions, and when the instructions are run on a computer or a processor, the computer or the processor is enabled to implement the method according to any one of claims 1 to 8.

FIG. 1

FIG. 2

FIG. 3

Obtain a first image and a second image — S301

Obtain a first depth map and a second depth map — S302

Determine a distance between an object in the first image and a vehicle and/or a distance between an object in the second image and the vehicle based on the first depth map and the second depth map — S303

FIG. 4

Target network

First subnet → Second subnet →
Third subnet
Fourth subnet
Fifth subnet

FIG. 5

First image → Input → First subnet → Output → First feature map

Second image → Input → First subnet → Output → Second feature map

FIG. 6

Pixel corresponding to an edge
of an object 1 in a first image

Three-dimensional
coordinate system

Translate the pixel corresponding to the edge
of the object 1 in the second image in three-
dimensional space, so that the pixel is aligned
with the pixel corresponding to the edge of
the object 1 in the first image in the three-
dimensional space

Pixel corresponding to an edge of
the object 1 in a second image

FIG. 7

Floating obstacle

Detection area of an ultrasonic sensor

Field-of-view area
of a second camera

Floating obstacle

Same field-of-
view area

Field-of-view area of a first camera

FIG. 8

Display

Setting

FIG. 9

| Sensor | State | |
|---|---|---|
| Front-view fisheye camera | On | Off |
| Rear-view fisheye camera | On | Off |
| Front-view pinhole camera | On | Off |
| Rear-view pinhole camera | On | Off |
| Lidar | On | Off |
| Ultrasonic detector | On | Off |

FIG. 10

Field of view of a front-view pinhole camera

Field of view of a front-view fisheye camera

FIG. 11

**EP 4 575 579 A1**

| Sensor | State | |
|---|---|---|
| Front-view fisheye camera | On | Off |
| Rear-view fisheye camera | On | Off |
| Front-view pinhole camera | On | Off |
| Rear-view pinhole camera | On | Off |
| Lidar | On | Off |
| Ultrasonic detector | On | Off |

FIG. 12

FIG. 13

30

| Sensor | State | |
|---|---|---|
| Front-view fisheye camera | On | Off |
| Rear-view fisheye camera | On | Off |
| Front-view pinhole camera | On | Off |
| Rear-view pinhole camera | On | Off |
| Lidar | On | Off |
| Ultrasonic detector | On | Off |

FIG. 14

FIG. 15

| Sensor | State | |
|---|---|---|
| Front-view fisheye camera | On | Off |
| Rear-view fisheye camera | On | Off |
| Front-view pinhole camera | On | Off |
| Rear-view pinhole camera | On | Off |
| Lidar | On | Off |
| Ultrasonic detector | On | Off |

FIG. 16

FIG. 17

2 meters

The vehicle travels
straight

0.4 meters

⚠️ **There is an object ahead.
Please be cautious and
avoid it!**

FIG. 18

Ranging apparatus 1800

Obtaining unit 1801

Network unit 1802

Determining unit 1803

FIG. 19

Chip 1900

Processor 1901

Bus 1903

Interface circuit 1902

FIG. 20

Electronic device 100

Antenna 1    Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging management module [140]

Power management module [141]

Battery [142]

Charging input

FIG. 21

**INTERNATIONAL SEARCH REPORT**

| International application No. |
| --- |
| **PCT/CN2023/108397** |

### A. CLASSIFICATION OF SUBJECT MATTER

G01S 17/931(2020.01)i

According to International Patent Classification (IPC) or to both national classification and IPC

### B. FIELDS SEARCHED

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNTXT, CNABS, CNKI, ENTXT: 测距, 车, 障碍物, 相机, 鱼眼, 针孔, 深度, 距离, 特征, 校准, obstacle, vehicle, image, camera, depth, fisheye

### C. DOCUMENTS CONSIDERED TO BE RELEVANT

| Category* | Citation of document, with indication, where appropriate, of the relevant passages | Relevant to claim No. |
| --- | --- | --- |
| X | CN 109708655 A (BAIDU ONLINE NETWORK TECHNOLOGY (BEIJING) CO., LTD.) 03 May 2019 (2019-05-03) <br> description, paragraphs [0025]-[0123], and figures 1-6 | 1-20 |
| X | CN 114782911 A (XIAOMI AUTOMOBILE TECHNOLOGY CO., LTD.) 22 July 2022 (2022-07-22) <br> description, paragraphs [0044]-[0111], and figures 4-11 | 1-20 |
| A | DE 102019100303 A1 (HELLA GMBH & CO. KGAA) 09 July 2020 (2020-07-09) <br> entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 October 2023** | **23 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
| Information on patent family members | **PCT/CN2023/108397** |

| Patent document cited in search report | | | Publication date (day/month/year) | Patent family member(s) | Publication date (day/month/year) |
|---|---|---|---|---|---|
| CN | 109708655 | A | 03 May 2019 | None | |
| CN | 114782911 | A | 22 July 2022 | None | |
| DE | 102019100303 | A1 | 09 July 2020 | None | |

Form PCT/ISA/210 (patent family annex) (July 2022)

**EP 4 575 579 A1**

**Patent documents cited in the description**

- CN 202211349288